# EUROPEAN PATENT APPLICATION

(11) **EP 4 401 321 A1**
(43) Date of publication of application: **17.07.2024**
(21) Application number: 21958988.4
(22) Date of filing: 30.09.2021
(51) Int. Cl.: H04B 1/00, H04B 7/04

(54) **RADIO FREQUENCY FRONT END MODULE, RADIO FREQUENCY APPARATUS AND COMMUNICATION DEVICE**

(71) Applicant: Huawei Technologies Co., Ltd., Shenzhen, Guangdong 518129 (CN)
(72) Inventor: WANG, Shuqi, Shenzhen, Guangdong 518129 (CN); YEO, Theng Tee, Shenzhen, Guangdong 518129 (CN); LI, Weihua, Shenzhen, Guangdong 518129 (CN)
(74) Representative: Epping - Hermann - Fischer
(86) International application number: PCT/CN2021/122440
(87) International publication number: WO 2023/050421

(57) **Abstract**

This application provides a radio frequency front end module, a radio frequency apparatus, and a communication device. The radio frequency front end module may be coupled to a radio frequency transceiver circuit without a need for an additional switch, reducing board-level costs of the communication device and improving integration. A first port is coupled to a sending branch and a receiving branch through a switching module, and a second port is coupled to the sending branch and the receiving branch through the switching module. The first port supports signal transmission of a first frequency band, and the second port supports signal transmission of a second frequency band, where the first frequency band is different from the second frequency band. The receiving branch supports receiving processing of signals of the first frequency band and the second frequency band. The sending branch supports sending processing of signals of the first frequency band and the second frequency band. The switching module is configured to selectively transmit a signal processed by the sending branch to the first port or the second port, or selectively transmit a signal received by the first port or a signal received by the second port to the receiving branch.

## Description

### TECHNICAL FIELD

This application relates to the field of radio frequency technologies, and in particular, to a radio frequency front end module, a radio frequency apparatus, and a communication device.

### BACKGROUND

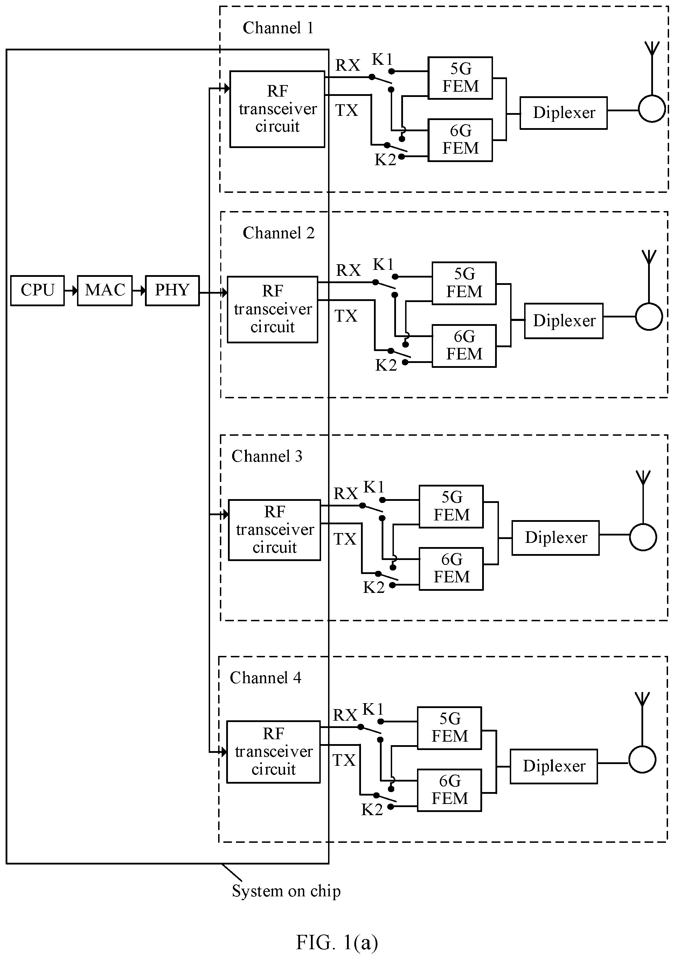

At present, more communication devices can support dual band dual concurrent (dual band dual concurrent, DBDC) communication mode (mode). In the dual band dual concurrent communication mode, operating bands of two channels may be different. The DBDC communication mode can significantly improve data a transmission rate and transmission reliability, and reduce a transmission delay. As shown in FIG. 1(a), an existing radio frequency system can support a dual band dual concurrent mode of two frequency bands Wi-Fi 5G and Wi-Fi 6G in a wireless fidelity (wireless fidelity, Wi-Fi) technology. The radio frequency system may include a plurality of independent channels. Each channel can work independently in parallel. For example, when a channel 1 is used as a transmit channel, a channel 2 may be used as a receive channel or a sending channel. When the channel 2 is used as a transmit channel, the channel 1 may alternatively be used as a receive channel or a sending channel.

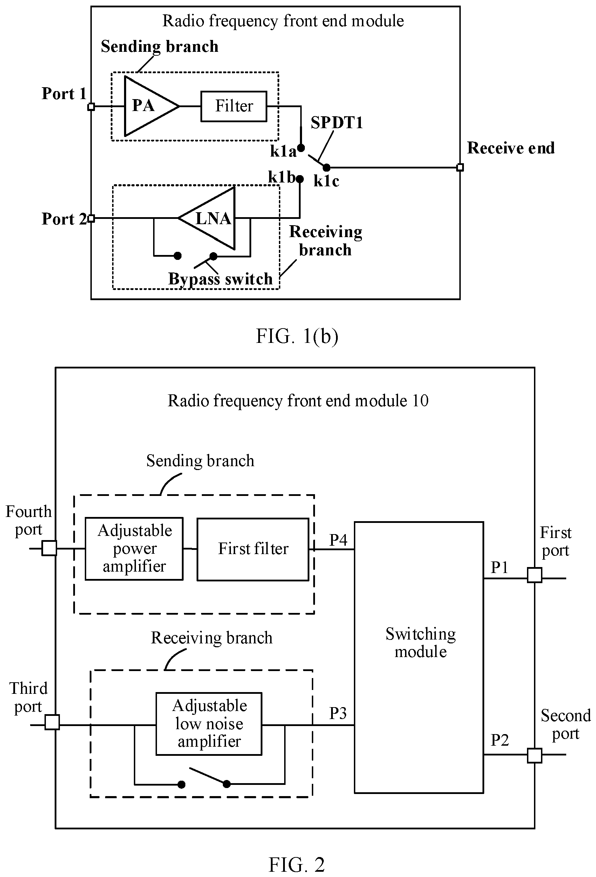

In the existing radio frequency system, a Wi-Fi chip (usually a system on chip) usually integrates a baseband signal processor and a plurality of radio frequency (radio frequency, RF) transceiver circuits. The RF transceiver circuit performs radio frequency front end processing by using a front end module (front end module, FEM), to implement a frequency band supported by a receiving/sending FEM. An existing FEM supports only one frequency band and is integrated independently. As shown in FIG. 1(b), an existing FEM generally includes an SPDT1, a sending branch, and a receiving branch. The sending branch generally includes a power amplifier and a filter connected in series. The receiving branch generally includes a low noise amplifier. A contact end kla of the SPDT1 is coupled to the sending branch, a contact end klb of the SPDT1 is coupled to the receiving branch, and a movable end klc of the SPDT1 is coupled to a receive end of a radio frequency front end module. A receive end of the FEM may be coupled to one end of a diplexer. In the existing FEM, if the sending branch and the receiving branch support a signal of a 5G frequency band, the FEM is a 5G FEM. Correspondingly, if the sending branch and the receiving branch support a signal of a 6G frequency band, the FEM is a 6G FEM. The RF transceiver circuit can receive and send the signal of the 5G frequency band through the 5G FEM. The RF transceiver circuit can receive and send the signal of the 6G frequency band through the 6G FEM.

In FIG. 1(a), a port RX of a down-conversion circuit of each RF transceiver circuit is separately connected to a 5G FEM and a 6G FEM through a changeover switch K1, so that the RF transceiver circuit can receive a signal of a 5G frequency band through the 5G FEM or receive a signal of a 6G frequency band through the 6G FEM. A port TX of an up-conversion circuit of the RF transceiver circuit is separately connected to the 5G FEM and the 6G FEM through a changeover switch K2, so that the RF transceiver circuit can send the signal of the 5G frequency band through the 5G FEM or send the signal of the 6G frequency band through the 6G FEM.

The Wi-Fi chip and the existing FEM are separately integrated independently, and the baseband signal processor is connected to the existing FEM through a changeover switch. This imposes a high requirement on cabling of a printed circuit board (printed circuit board, PCB) that integrates a radio frequency system in a communication device, and also increases board-level costs. A general-purpose I/O port (general purpose I/O ports, GPIO) also needs to be added to the baseband signal processor, to perform gating control on the changeover switch connected to the RF transceiver circuit, increasing package costs of a baseband processor in the radio frequency system.

### SUMMARY

This application provides a radio frequency front end module, a radio frequency apparatus, and a communication device. The radio frequency front end module does not need an additional changeover switch for connection to an RF transceiver circuit. The radio frequency front end module may be directly connected to the RF transceiver circuit, thereby reducing board-level costs of a PCB of a radio frequency system to which the radio frequency front end module belongs. In addition, a GPIO does not need to be added to a baseband signal processor in the radio frequency system to control an additional changeover switch.

According to a first aspect, this application provides a radio frequency front end module, including a first port, a second port, a receiving branch, a sending branch, and a switching module. The first port is coupled to the sending branch and the receiving branch through the switching module, and the second port is coupled to the sending branch and the receiving branch through the switching module. The first port supports signal transmission of a first frequency band, and the second port supports signal transmission of a second frequency band, where the first frequency band is different from the second frequency band. The receiving branch supports receiving processing of signals of the first frequency band and the second frequency band. The sending branch supports sending processing of signals of the first frequency band and the second frequency band. The switching module is configured to selectively transmit a signal processed by the sending branch to the first port or the second port, or selectively transmit a signal received by the first port or a signal received by the second port to the receiving branch.

Based on the foregoing structure of the radio frequency front end module, the radio frequency front end module may support receiving and sending of the first frequency band, and support receiving and sending of the second frequency band. The switching module has a gating function (or capability). In other words, the switching module may selectively connect any port to either of the sending branch or the receiving branch. For example, the switching module may connect the first port to the receiving branch, so that the signal of the first frequency band received at the first port is provided to the receiving branch. Alternatively, the second port may be connected to the receiving branch, so that the signal of the second frequency band received at the second port is provided to the receiving branch. Alternatively, the sending branch is connected to the first port, so that a signal output by the sending branch is sent through the first port. Alternatively, the sending branch is connected to the second port, so that a signal output by the sending branch is sent through the second port. Based on the function that the switching module may selectively connect any port to either of the sending branch or the receiving branch, when the radio frequency front end module is applied to a radio frequency system, one radio frequency front end module may be configured to support receiving/sending of the first frequency band and the second frequency band. However, in an existing radio frequency system, two existing front end modules need to be connected to an RF transceiver circuit through a changeover switch, so that the RF transceiver circuit can support receiving/sending of the first frequency band and the second frequency band. It can be learned that, when the radio frequency front end module provided in embodiments of this application is applied to the radio frequency system, the changeover switch does not need to be added between the RF transceiver circuit and the radio frequency front end module, thereby reducing board-level costs and a GPIO does not need to be added to an SOC chip, thereby lowering package costs of the SOC chip. The radio frequency front end module provided in this application may occupy less space.

In a possible design, the radio frequency front end module may further include: a first isolation module and a second isolation module. The first port is coupled to the switching module through the first isolation module, and the first isolation module is configured to selectively connect or isolate the first port to/from the switching module. The second port is coupled to the switching module through the second isolation module, and the second isolation module is configured to selectively connect or isolate the second port to/from the switching module.

In embodiments of this application, in a scenario in which the radio frequency front end module receives a signal, when the receiving branch processes the signal of the first frequency band, a frequency of an interference signal (which may also be referred to as a blocker signal) received or coupled by the second port falls within the first frequency band, or power of the interference signal is excessively high. The interference signal affects processing of the signal of the first frequency band by the receiving branch, and may block a down-conversion circuit of the radio frequency transceiver circuit. In the radio frequency front end module provided in this application, the first isolation module may transmit the signal of the first frequency band to the switching module, the switching module provides the signal of the first frequency band to the receiving branch, and the second isolation module isolates the second port from the switching module, to isolate or attenuate the interference signal and thereby prevent the interference signal from being coupled to the receiving branch to affect processing of the signal of the first frequency band by the receiving branch. Similarly, when the receiving branch processes the signal of the second frequency band, the frequency of the interference signal received or coupled by the first port falls within the second frequency band, or power of the interference signal is excessively high. The interference signal affects processing of the signal of the second frequency band by the receiving branch, and may block the down-conversion circuit of the radio frequency transceiver circuit. The second isolation module may transmit the signal of the second frequency band to the switching module, the switching module provides the signal of the second frequency band to the receiving branch, and the first isolation module isolates the first port from the switching module, to attenuate the interference signal and thereby prevent the interference signal from being coupled to the receiving branch to affect processing of the signal of the second frequency band by the receiving branch. In a scenario in which the radio frequency front end module sends a signal, the switching module may output a signal provided by the sending branch to the first isolation module, and the first isolation module connects the switching module to the first port, to send the signal through the first port. Alternatively, the switching module may output the signal provided by the sending branch to the second isolation module, and the second isolation module may connect the switching module to the second port, to send the signal through the second port.

In a possible design, when the receiving branch is connected to the second port and the signal of the second frequency band is received through the second port, the first isolation module may isolate the interference signal received by the first port, so that power of the isolated interference signal is attenuated below a preset first threshold at the receiving branch.

In a possible design, when the receiving branch is connected to the second port and the signal of the second frequency band is received through the second port, the first isolation module may isolate the interference signal received by the first port, so that power density of the isolated interference signal in the second frequency band is less than a second threshold, and at least part of a frequency of the interference signal falls within a range of the second frequency band. In a possible design, when the receiving branch is connected to the second port and the signal of the first frequency band is received through the first port, the second isolation module may isolate the interference signal received by the second port, so that power of the isolated interference signal is attenuated to a preset third threshold at the receiving branch.

In a possible design, when the receiving branch is connected to the first port and the signal of the first frequency band is received through the first port, the interference signal received by the second port is isolated, so that power density of the isolated interference signal in the first frequency band is less than a preset fourth threshold, and at least part of a frequency of the interference signal falls within a range of the first frequency band.

In a possible design, the first isolation module may include at least one single-pole single-throw switch. Isolation of the first isolation module may be changed by adjusting an on/off state of each switch in the first isolation module. The second isolation module includes at least one single-pole single-throw switch. Isolation of the second isolation module may be changed by adjusting an on/off state of each switch in the second isolation module. For example, when the first isolation module includes one single-pole single-throw switch, and the single-pole single-throw switch in the first isolation module is in an on state, the first port may be connected to the switching module. When the single-pole single-throw switch in the first isolation module is in an off state, the first port may be isolated from the switching module. Similarly, when the second isolation module may include a single-pole single-throw switch, and the single-pole single-throw switch in the second isolation module is in an on state, the second port may be connected to the switching module. When the single-pole single-throw switch in the second isolation module is in an off state, the second port may be isolated from the switching module.

In a possible design, the isolation of the first isolation module is adjustable, and the isolation of the second isolation module is adjustable. When isolating the first port from the switching module, the first isolation module may selectively adjust an attenuation degree of the interference signal received by the first port; or when isolating the second port from the switching module, the second isolation module may selectively adjust an attenuation degree of the interference signal received by the second port. In embodiments of this application, an isolation function (or an isolation capability) of the first isolation module is adjustable. In other words, the attenuation degree of the interference signal may be adjusted to improve application flexibility of the radio frequency front end module. Similarly, an isolation function (or an isolation capability) of the second isolation module is also adjustable. The attenuation degree of the interference signal can be adjusted to improve the application flexibility of the radio frequency front end module. In a possible design, the switching module includes at least a first changeover switch and a second changeover switch. The first changeover switch is separately coupled to the first isolation module, the sending branch, and the receiving branch. The first changeover switch may selectively connect either of the sending branch or the receiving branch to the first isolation module. The second changeover switch is separately coupled to the second isolation module, the sending branch, and the receiving branch. The second changeover switch may be configured to selectively connect either of the sending branch or the receiving branch to the second isolation module.

Based on the foregoing structure of the switching module, when the first changeover switch connects the receiving branch to the first isolation module, the second changeover switch isolates the receiving branch from the second isolation module, to attenuate an interference signal coupled to the second changeover switch, thereby preventing the interference signal from entering the receiving branch to cause blockage. It can be learned that the second changeover switch has a function of isolating the interference signal. In addition, when the second changeover switch connects the receiving branch to the second isolation module, the first changeover switch isolates the receiving branch from the first isolation module, to attenuate an interference signal coupled to the first changeover switch, thereby preventing the interference signal from entering the receiving branch to cause blockage. It can be learned that the first changeover switch has a function of isolating the interference signal.

In some examples, the first changeover switch may be a single-pole multi-throw switch. A movable end of the first changeover switch is coupled to the first isolation module, a first contact end of the first changeover switch is coupled to the sending branch, and a second contact end of the first changeover switch is coupled to the receiving branch. The second changeover switch may be a single-pole multi-throw switch. A movable end of the second changeover switch is coupled to the second isolation switch, a third contact end of the second changeover switch is coupled to the sending branch, and a fourth contact end of the second changeover switch is coupled to the receiving branch.

In a possible design, the switching module includes at least a third changeover switch and a fourth changeover switch. The third changeover switch is separately coupled to the first isolation module, the second isolation module, and the fourth changeover switch. The third changeover switch may be configured to selectively connect either of the first isolation module or the second isolation module to the fourth changeover switch. The fourth changeover switch is coupled to the sending branch, the receiving branch, and the third changeover switch. The fourth changeover switch may be configured to selectively connect either of the sending branch or the receiving branch to the third changeover switch.

In some examples, the third changeover switch may be a single-pole multi-throw switch. The fourth changeover switch is a single-pole multi-throw switch. A movable end of the third changeover switch is coupled to a movable end of the fourth changeover switch, a fifth contact end of the third changeover switch is coupled to the first isolation module, and a sixth contact end of the third changeover switch is coupled to the second isolation module. A seventh contact end of the fourth changeover switch is coupled to the sending branch, and an eighth contact end of the fourth changeover switch is coupled to the receiving branch.

In a possible design, the receiving branch includes an adjustable low noise amplifier, and an operating band of the adjustable low noise amplifier covers the first frequency band and the second frequency band. The receiving branch includes the adjustable low noise amplifier and a bypass switch connected in parallel to the low noise amplifier. When being in an on state, the bypass switch transmits a signal provided by the switching module to the third port. When the bypass switch is in an off state, the low noise amplifier processes the signal provided by the switching module, and provides a processed signal to the third port.

In a possible design, the sending branch includes a power amplifier and a filter connected in series. A bandwidth of the filter covers the first frequency band and the second frequency band, or the filter is an adjustable filter, and an operating band of the adjustable filter covers the first frequency band and the second frequency band.

In a possible design, the first frequency band is a Wi-Fi 5G frequency band, and the second frequency band is a Wi-Fi 6G frequency band.

According to a second aspect, this application provides a radio frequency apparatus, a signal splitter, the radio frequency front end module according to the first aspect and any design therein, a down-conversion circuit, and an up-conversion circuit. The signal splitter is separately coupled to a first port of the radio frequency front end module, a second port of the radio frequency front end module, and an antenna. The down-conversion circuit is coupled to a receiving branch of the radio frequency front end module, and is configured to perform down-mixing processing on a signal output by the radio frequency front end module. The up-conversion circuit is coupled to a sending branch of the radio frequency front end module, and is configured to perform up-mixing processing on a baseband signal and output a processed baseband signal to the sending branch of the radio frequency front end module.

Based on the foregoing structure of the radio frequency apparatus, in a scenario in which the radio frequency apparatus receives a signal, the signal splitter may provide a signal of a first frequency band for the first port, or provide a signal of a second frequency band for the second port. The down-conversion circuit may perform down-mixing processing on a signal processed by the radio frequency front end module. In a scenario in which the radio frequency apparatus sends a signal, the up-conversion circuit may perform up-mixing processing on a baseband signal provided by a baseband signal processor, for example, convert the baseband signal into a radio frequency signal. A converted signal is provided to the radio frequency front end module, the radio frequency front end module processes the received signal, and the processed signal is output to the signal splitter. The signal splitter may provide, to the antenna, a signal that is output by the first port or the second port and that is processed by the radio frequency front end module.

In a possible design, the up-conversion circuit may have an up-mixing processing function or capability. The down-conversion circuit may have a down-mixing processing function or capability. The radio frequency apparatus further includes a polyphase filter, and the polyphase filter may provide a local-frequency signal for the up-conversion circuit and the down-conversion circuit.

The down-conversion circuit may perform, based on the local-frequency signal, down-mixing processing on the signal processed by the radio frequency front end module. For example, the down-conversion circuit may convert a radio frequency signal into a baseband signal. In some examples, the down-conversion circuit may include but is not limited to a low noise amplifier, a first mixer, a low-pass filter, a variable gain amplifier, and an analog-to-digital converter. The first mixer is coupled to the polyphase filter.

The up-conversion circuit may perform, based on the local-frequency signal, up-mixing processing on the baseband signal provided by the baseband signal processor. For example, the up-conversion circuit may convert a baseband signal into a radio frequency signal. In some examples, the up-conversion circuit may include but is not limited to a power amplifier, a second mixer, and a low-pass filter. The second mixer is coupled to the polyphase filter. The power amplifier, the second mixer, and the low-pass filter are sequentially connected in series. A gain of the power amplifier is less than a gain of a power amplifier in the radio frequency front end module.

According to a third aspect, this application further provides a communication device. The communication device may include a Wi-Fi chip and a plurality of radio frequency front end modules according to the first aspect and any design therein. The Wi-Fi chip is separately coupled to the plurality of radio frequency front end modules. The plurality of radio frequency front end modules are configured to support dual band dual concurrent or single-band multiple-input multiple-output.

In a possible design, the plurality of radio frequency front end modules are configured to support dual band dual concurrent, and the plurality of radio frequency front end modules include a first radio frequency front end module and a second radio frequency front end module. When the first radio frequency front end module sends or receives a signal of a first frequency band, the second radio frequency front end module is specifically configured to send or receive a signal of a second frequency band; or when the first radio frequency front end module sends or receives a signal of a second frequency band, the second radio frequency front end module is specifically configured to send or receive a signal of a first frequency band.

The following uses an example in which when the first radio frequency front end module sends or receives the signal of the first frequency band, the second radio frequency front end module is specifically configured to send or receive the signal of the second frequency band. The signal of the first frequency band sent by the first radio frequency apparatus causes coexistence interference to the second radio frequency apparatus. The radio frequency front end module in the second radio frequency apparatus includes a first isolation module and a second isolation module. A first port may be configured to receive the signal of the second frequency band. The second isolation module may isolate an interference signal received at a second port from a switching module, to attenuate power or power density of the interference signal and thereby avoid affecting processing of the signal of the second frequency band by the receiving branch. Alternatively, a second port may be configured to receive the signal of the second frequency band. The first isolation module may isolate an interference signal received at a first port from a switching module, to attenuate power or power density of the interference signal and thereby avoid affecting processing of the signal of the second frequency band by the receiving branch.

In a possible design, the plurality of radio frequency front end modules are configured to support single-band multiple-input multiple-output. The plurality of radio frequency front end modules include a first radio frequency front end module and a second radio frequency front end module. When the first radio frequency front end module sends the signal of the first frequency band or the signal of the second frequency band, the second radio frequency front end module is specifically configured to send a signal of a same frequency band as the signal sent by the first radio frequency apparatus; or when the first radio frequency front end module receives the signal of the first frequency band or the signal of the second frequency band, the second radio frequency front end module is specifically configured to receive a signal of a same frequency band as the signal sent by the first radio frequency front end module.

In some possible designs, the first frequency band and the second frequency band may be a Wi-Fi 5G frequency band and a Wi-Fi 6G frequency band, respectively.

For a technical effect that can be achieved by any possible design in the second aspect or the third aspect, refer to a technical effect that can be achieved by any possible design in the first aspect. Details are not described herein again.

### BRIEF DESCRIPTION OF DRAWINGS

FIG. 1 (a) is a schematic diagram of a structure of an existing communication device;
FIG. 1 (b) is a schematic diagram of a structure of an existing radio frequency front end module;
FIG. 2 is a schematic diagram of a structure of a radio frequency front end module according to this application;
FIG. 3 is a schematic diagram of coexistence interference;
FIG. 4 is a schematic diagram of an interference signal in a coexistence interference problem;
FIG. 5 is a schematic diagram of a structure of another radio frequency front end module according to this application;
FIG. 6 is a schematic diagram of a structure of still another radio frequency front end module according to this application;
FIG. 7 is a schematic diagram of a structure of still another radio frequency front end module according to this application;
FIG. 8 is a schematic diagram of a structure of still another radio frequency front end module according to this application;
FIG. 9(a) is a schematic diagram of a structure of a communication device according to this application;
FIG. 9(b)-1 and FIG. 9(b)-2 are schematic diagrams of coexistence interference suppression in a communication device according to this application;

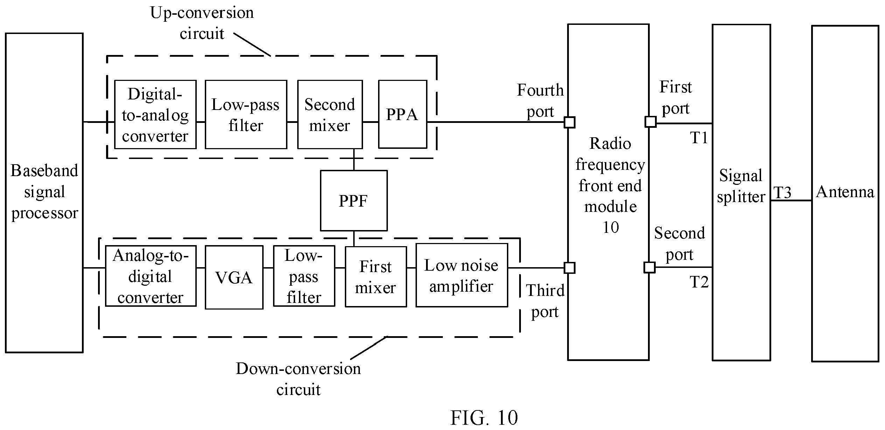

FIG. 10 is a schematic diagram of a structure of a radio frequency transceiver circuit;

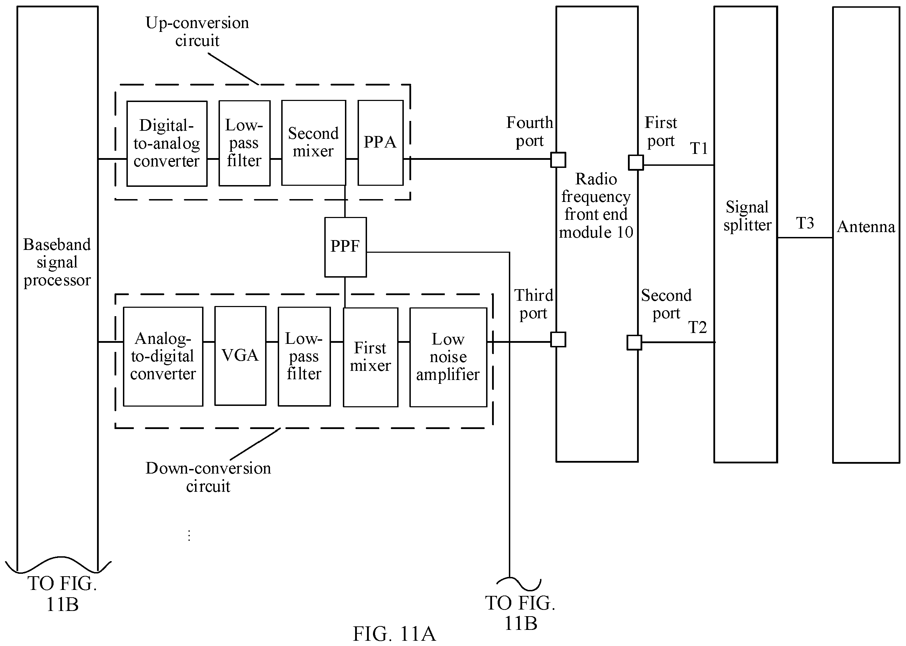

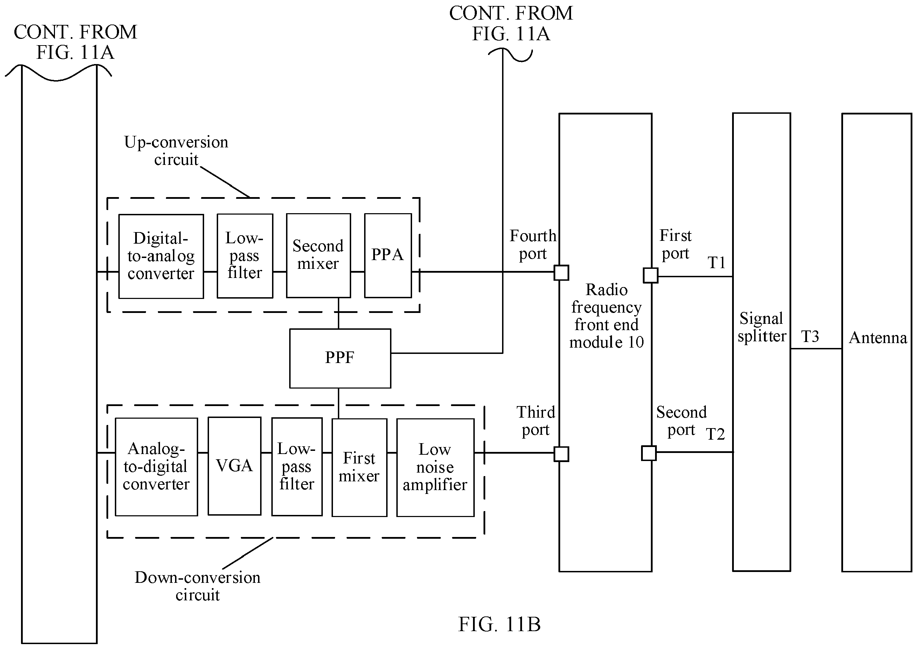

FIG. 11A and FIG. 11B are schematic diagrams of a specific structure of a communication device according to this application; and

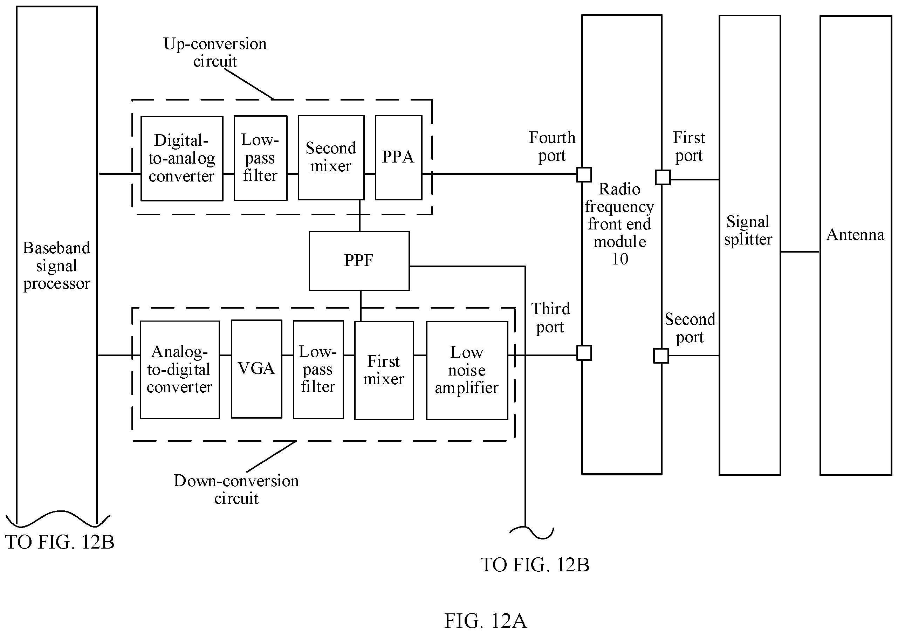

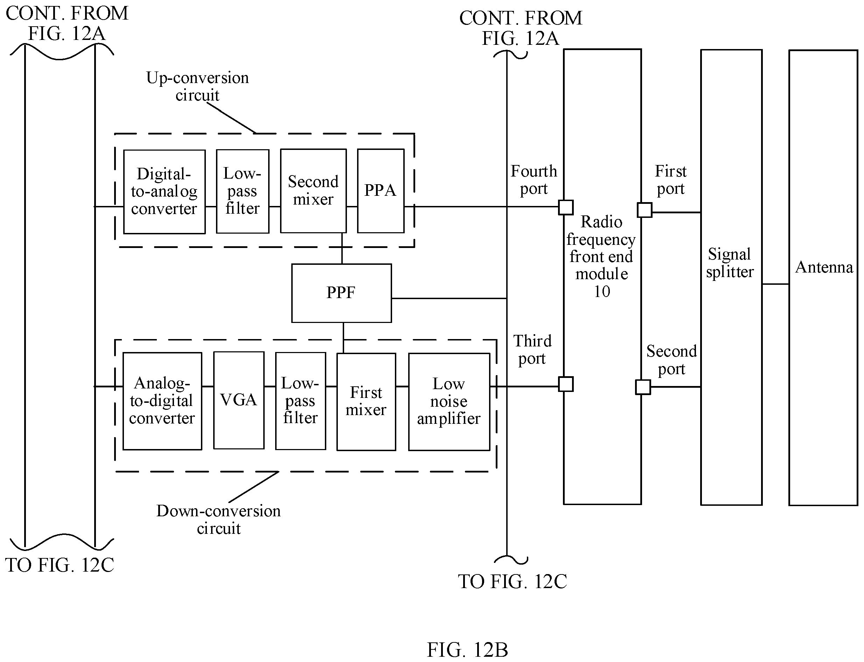

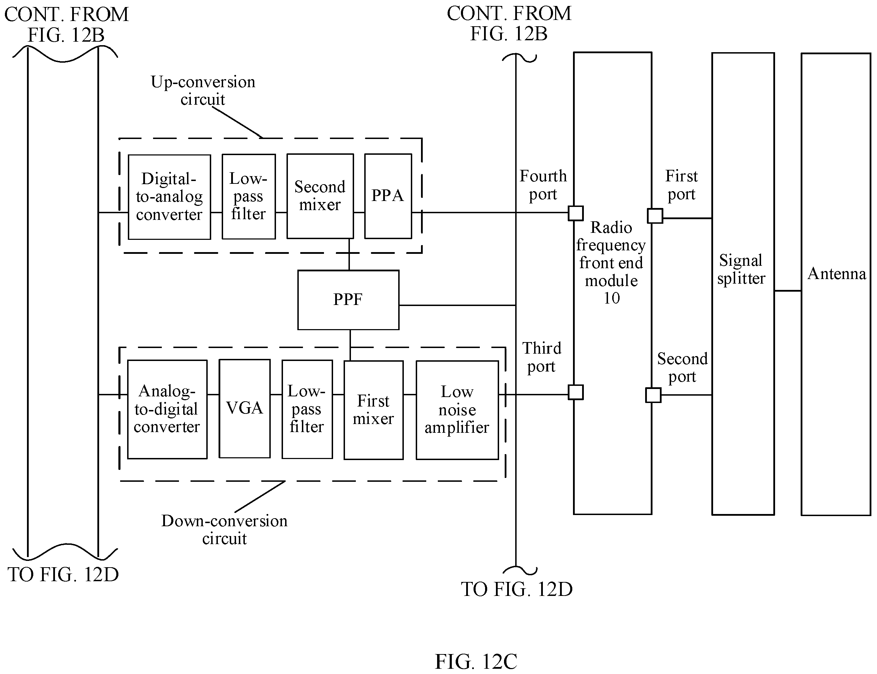

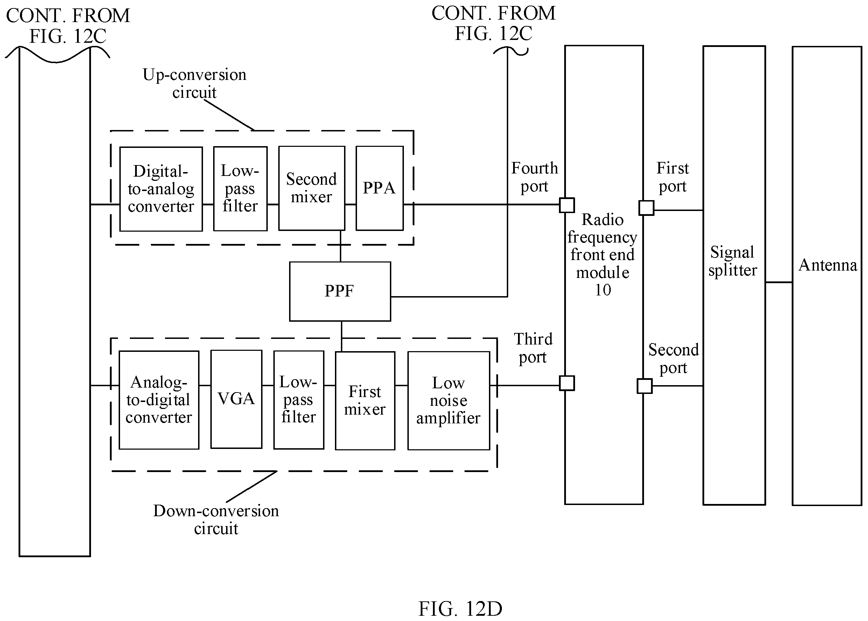

FIG. 12A to FIG. 12D are schematic diagrams of a structure of another communication device according to this application.

### DESCRIPTION OF EMBODIMENTS

A wireless communication device generally includes a radio frequency system. The radio frequency system may support a data communication function of the communication device. With the development of electronic circuit technologies, the radio frequency system has a high integration level, and may be integrated on a chip. A conventional radio frequency system supports two spatial flows, that is, has two channels. As a data transmission requirement increases, considering a chip area and performance, currently, a single radio frequency system may support four spatial flows, that is, has four channels, as shown in FIG. 1(a). Compared with the radio frequency system having two channels, the radio frequency system having four channels can improve stability of wireless air interface data transmission, and at a same rate, has a nearly doubled coverage area, demonstrating a more obvious advantage in a high-speed scenario.

FIG. 1(a) shows an architecture of a radio frequency system. A Wi-Fi chip in the radio frequency system usually integrates a baseband signal processor and an RF transceiver circuit, to enable the radio frequency system to form a plurality of signal transceiver channels, and each channel may include a radio frequency transceiver circuit (RF transceiver circuit), a radio frequency FEM, and an antenna. If the radio frequency front end module in the channel is a 5G FEM, the channel may support receiving and sending of a signal of a Wi-Fi 5G frequency band. If the radio frequency front end module in the channel is a 6G FEM, the channel may support receiving and sending of a signal of a Wi-Fi 6G frequency band. The RF transceiver circuit may exchange signals with the baseband signal processor. The baseband signal processor usually includes a central processing unit (central processing unit, CPU), a media access control (media access control, MAC) layer, and a physical layer (physical layer, PHY). The CPU, the MAC, the PHY, and the like may be implemented through a corresponding protocol layer processing module based on a function of each protocol layer in a communication device. For example, the PHY layer may implement functions of the PHY layer in protocols such as 802.11a, 802. 11b, 802.11g, 802.11n, and 802.11ac. The MAC layer may implement functions of the MAC layer in protocols such as 802.11a, 802. 11b, 802.1 1g, 802.11n, and 802.11ac.

In an existing radio frequency system, each channel may support receiving and sending of the signal of the Wi-Fi 5G frequency band and the signal of the Wi-Fi 6G frequency band. A port RX of a down-conversion circuit of the RF transceiver circuit in each channel is separately connected to the 5G FEM and the 6G FEM through a changeover switch K1, so that the RF transceiver circuit can receive the signal of the 5G frequency band through the 5G FEM or receive the signal of the 6G frequency band through the 6G FEM. A port TX of an up-conversion circuit of the RF transceiver circuit is separately connected to the 5G FEM and the 6G FEM through a changeover switch K2, so that the RF transceiver circuit can send the signal of the 5G frequency band through the 5G FEM or send the signal of the 6G frequency band through the 6G FEM.

The Wi-Fi chip and an existing FEM are separately integrated independently, and the Wi-Fi chip is connected to the existing FEM through a changeover switch. This imposes a high requirement on cabling of a PCB that integrates a radio frequency system in a communication device, and also increases board-level costs. In addition, a GPIO needs to be added to the Wi-Fi chip, to perform gating control on a changeover switch connected to the RF transceiver circuit. In other words, a working front end module is selected through the changeover switch, thereby increasing package costs of the Wi-Fi chip in the radio frequency system.

In view of this, this application provides a radio frequency front end module 10. The radio frequency front end module 10 does not need an additional changeover switch for connection to the RF transceiver circuit. The radio frequency front end module 10 may be directly connected to the RF transceiver circuit, thereby reducing board-level costs of a PCB of a radio frequency system to which the radio frequency front end module 10 belongs. In addition, a GPIO does not need to be added to a Wi-Fi chip in the radio frequency system to control the additional changeover switch.

The radio frequency front end module 10 provided in this embodiment of this application may support receiving/sending of a signal of a first frequency band and receiving/sending of a signal of a second frequency band. The first frequency band and the second frequency band are different frequency bands. Refer to FIG. 2. The radio frequency front end module 10 may include a plurality of ports, a receiving branch, a switching module, and a sending branch. The plurality of ports in the radio frequency front end module 10 may include at least a first port and a second port.

The first port and the second port may be respectively coupled to two output ends of a signal splitter (or referred to as a diplexer (diplexer)). The first port may support signal transmission of a first frequency band. The first port may be coupled to the switching module, for example, coupled to a first end P1 of the switching module. The second port may support signal transmission of a second frequency band. The second port may be coupled to the switching module, for example, coupled to a second end P2 of the switching module.

The plurality of ports in the radio frequency front end module 10 may further include a third port. The switching module may be coupled to the receiving branch. For example, the receiving branch may be coupled to a third end P3 of the switching module. The receiving branch is connected to a down-conversion circuit of an RF transceiver circuit through the third port. The switching module may selectively transmit a signal received by the first port or a signal received by the second port to the receiving branch. The receiving branch may perform signal processing on a signal of the first frequency band or a signal of the second frequency band provided by the switching module, and provide a processed signal to the down-conversion circuit of the RF transceiver circuit.

In some examples, refer to FIG. 2, the receiving branch may include an adjustable low noise amplifier, that is, a parameter-adjustable low noise amplifier. One end of the adjustable low noise amplifier is connected to the third end P3 of the switching module, and another end of the adjustable low noise amplifier is connected to the third port of the radio frequency front end module 10. The parameter of the low noise amplifier is adjusted to enable an operating band of the adjustable low noise amplifier to cover the first frequency band and the second frequency band. In other words, the adjustable low noise amplifier may support processing of the first frequency band and the second frequency band. For example, the adjustable low noise amplifier may have a capability (or a function) of processing the signal of the first frequency band, for example, amplifying the signal of the first frequency band, and may also have a capability (or a function) of processing the signal of the second frequency band, for example, amplifying the signal of the second frequency band. In other words, the low noise amplifier in the receiving branch may match a frequency band of a signal. The receiving branch may include a bypass switch. The bypass switch is connected in parallel to the low noise amplifier. The bypass switch may be configured to selectively bypass the low noise amplifier. For example, when the bypass switch is in an on state, the low noise amplifier may be short-circuited, and a signal provided by the switching module is transmitted to the third port.

The plurality of ports in the radio frequency front end module 10 may further include a fourth port. The switching module may be coupled to the sending branch. For example, the sending branch may be coupled to a fourth end P4 of the switching module. The sending branch is connected to an up-conversion circuit of the RF transceiver circuit through the fourth port. The sending branch may amplify a signal (which is the signal of the first frequency band or the signal of the second frequency band) provided by the up-conversion circuit, and provide a processed signal to the switching module. The switching module may selectively transmit, to the first port or the second port, the signal processed by the sending branch.

In some examples, refer to FIG. 2, the sending branch may include a power amplifier and a first filter connected in series. The power amplifier in the sending branch may be an adjustable power amplifier (a parameter-adjustable power amplifier). One end of the first filter is coupled to the fourth end P4 of the switching module, and another end is coupled to one end of the adjustable power amplifier. Another end of the adjustable power amplifier is coupled to the fourth port of the radio frequency front end module 10. An operating band of the adjustable power amplifier covers the first frequency band and the second frequency band. In other words, the adjustable power amplifier may support processing of the first frequency band and the second frequency band. The adjustable power amplifier may have a capability (or a function) of processing the signal of the first frequency band, for example, amplifying the signal of the first frequency band, and may also have a capability (or a function) of processing the signal of the second frequency band, for example, amplifying the signal of the second frequency band. In other words, the power amplifier in the sending branch may match a frequency band of a signal.

The first filter in the sending branch is usually a band-pass filter. For example, the first filter may be a broad band filter, and a passband of the broad band filter may cover the first frequency band and the second frequency band, so that the filter can support filtering processing of the signal of the first frequency band and the signal of the second frequency band. Alternatively, the first filter may be an adjustable filter with adjustable bandwidth. An operating band of the adjustable filter may cover the first frequency band and the second frequency band. For example, the adjustable filter may include a plurality of filter circuits. For example, a first filter circuit in the plurality of filter circuits may have a function or capability of filtering the signal of the first frequency band, and a second filter circuit may have a function or capability of filtering the signal of the second frequency band. The adjustable filter may selectively use a filter circuit to filter a signal output by the adjustable power amplifier. Alternatively, the adjustable filter may be another type of adjustable filter. For details, refer to the conventional technologies. Details are not described herein again. In some examples, the sending branch may include a power coupler (power coupler), a power detector (power detector), a tuning (tuning) circuit, and the like.

In this embodiment of this application, the switching module has a gating function (or capability). In other words, the switching module may selectively connect any port to either of the sending branch or the receiving branch. For example, the switching module may connect the first port to the receiving branch, so that the signal of the first frequency band received at the first port is provided to the receiving branch. Alternatively, the second port may be connected to the receiving branch, so that the signal of the second frequency band received at the second port is provided to the receiving branch. Alternatively, the sending branch is connected to the first port, so that a signal output by the sending branch is sent through the first port. Alternatively, the sending branch is connected to the second port, so that a signal output by the sending branch is sent through the second port. Based on the capability that the switching module may selectively connect any port to either of the sending branch or the receiving branch, the radio frequency front end module 10 may work in a time division duplex (time division duplex, TDD) mode. At a same moment, the radio frequency front end module 10 supports receiving or sending of signals in one frequency band.

It can be learned that, when the radio frequency front end module 10 provided in this application is applied to the radio frequency system, no changeover switch needs to be added between the RF transceiver circuit and the radio frequency front end module 10. In addition, compared with the existing radio frequency system, the RF transceiver circuit needs two existing radio frequency front end modules to support the RF transceiver circuit in processing two frequency bands. Because the radio frequency front end module 10 provided in this application may support two frequency bands, the radio frequency front end module 10 is applied to the radio frequency system. One radio frequency front end module 10 is connected to the RF transceiver circuit, and can support the RF transceiver circuit in processing two frequency bands. According to the radio frequency front end module 10 provided in this application, board-level costs can be reduced, and no GPIO needs to be added to an SOC chip, thereby lowering package costs of the SOC chip, that is, a system in a package (system in a package, SIP). The radio frequency front end module 10 provided in this application may occupy less space.

The radio frequency front end module 10 provided in this embodiment of this application may support Wi-Fi communication, and the first frequency band and the second frequency band may be a Wi-Fi 5G frequency band and a Wi-Fi 6G frequency band, respectively. Alternatively, the first frequency band may be a 5G lowband (lowband), and the second frequency band may be a 5G highband (highband). Alternatively, the first frequency band may be a 6G lowband, and the second frequency band may be a 6G highband.

The existing radio frequency system shown in FIG. 1(a) is configured to be in a DBDC mode. The DBDC communication mode can significantly improve a data transmission rate and transmission reliability, and reduce a transmission delay. For ease of understanding advantages of the DBDC communication mode, the following briefly describes an application scenario of the DBDC communication mode. In a possible scenario, the radio frequency system works in the DBDC communication mode, and may support parallel running of a station (station, STA) mode and a direct (direct) mode. The direct mode is also be referred to as a Wi-Fi P2P mode. An operating band running in the STA is different from an operating band running in the P2P. For example, in a smart home scenario, a communication device may be coupled to a wireless router in a home, and download and play an online video by using a frequency band corresponding to the STA. Then, the communication device may transmit the video to a display device, such as a television, in the home by using a frequency band corresponding to the P2P. Compared with a dual-band asynchronism-concurrent (dual-band asynchronism-concurrent, DBAC) mode, that is, sending states or receiving states of various channels are the same at a same time, the DBDC communication mode can significantly improve the data transmission rate. In another possible scenario, the existing radio frequency system works in the DBDC communication mode, and may support dual-STA or dual-channel access. For example, the communication device may transmit same data (for example, data of a game application program) on two different frequency bands, and data transmission delays on the two different frequency bands are different. The communication device may apply data of a frequency band that is first successfully transmitted. It can be learned that the DBDC communication mode can improve data transmission reliability and reduce an overall delay. In still another possible scenario, the radio frequency system works in the DBDC communication mode, and may support concurrency of two access point (access point, AP) modes.

In other words, at a same moment, a channel 1 works in a 5G sending mode, and a channel 2 works in a 6G receiving mode, or the channel 1 works in a 6G sending mode, and the channel 2 works in a 5G receiving mode. In this case, a severe coexistence interference problem occurs. For example, sending of Wi-Fi 6G causes interference to receiving of Wi-Fi 5G, or sending of Wi-Fi 6G causes interference to receiving of Wi-Fi 5G. For ease of clarifying the coexistence interference problem, the following uses an operating band in Wi-Fi communication as an example for description. However, it does not indicate that the coexistence interference problem exists only in a Wi-Fi communication scenario. The coexistence interference problem may also occur in a mobile communication scenario or another communication scenario in the future.

Since 1999, a Wi-Fi communication standard has undergone five major versions. Wi-Fi 1 to Wi-Fi 5 can be considered as incremental improvements based on an original 802.11 standard. Wi-Fi 6 is the first Wi-Fi standard specially designed for a world where everything is connected. For example, Table 1 shows development of the Wi-Fi standard. As more communication devices support the new generation Wi-Fi 6, Wi-Fi 6 based on 2.4 GHz and 5 GHz frequency bands has become more familiar. In a Wi-Fi alliance (wireless fidelity alliance, WFA) certification roadmap, characteristics of a 6G frequency band, that is, Wi-Fi 6E, are clearly defined. Wi-Fi 6E is an enhanced version of Wi-Fi 6 (E stands for extended). Compared with Wi-Fi 6, Wi-Fi 6E adds a 6 GHz frequency band (5925-7125 MHz, 1.2 GHz bandwidth in total) to the original frequency band of Wi-Fi 6. In this application, a frequency band may be a frequency range. A frequency range applied to Wi-Fi operation is a frequency band (a full frequency band) applied to Wi-Fi operation. The full Wi-Fi frequency band can be divided into a plurality of frequency bands, for example, a 2.4 frequency band, a 5 frequency band, and a 6 frequency band. For a range of each frequency band, refer to the following Table 1.

**Table 1**

| Standard | | Year | Frequency (GHz) | Maximum transmission rate |
|---|---|---|---|---|
| | | | 2.4G frequency band: 2.4 GHz to 2.5 GHz | |
| | | | 5G frequency band: 4.9 GHz to 5.8 GHz | |
| | | | 6G frequency band: 5.9 GHz to 7.1 GHz | |
| Wi-Fi 1 | 802.11b | 1999 | 2.4 | 11 Mbps |
| Wi-Fi 2 | 802.11a | 1999 | 5 | 54 Mbps |
| Wi-Fi 3 | 802.11g | 2003 | 2.4 | 54 Mbps |
| Wi-Fi 4 | 802.11n | 2009 | 2.4/5 | 600 Mbps |
| Wi-Fi 5 | 802.11ac | 2015 | 5 | 3.46 Gbps |
| Wi-Fi 6 | 802.11ax | 2018 | 2.4/5 | 9.6 Gbps |
| Wi-Fi 6E | 802.11ax | 2020 | 6 | 9.6 Gbps |

The new 6G frequency band will greatly promote continuous growth of Wi-Fi. The 6G frequency band is adjacent to the 5G frequency band and has high availability. The 6G frequency band may accommodate seven 160 MHz frequency bands (frequency band bandwidth, band), or 14 80 MHz frequency bands. Before Wi-Fi 6E is introduced, Wi-Fi operating bands include 2.4 GHz and 5 GHz frequency bands. In a smart home scenario, dozens of communication devices may occupy bandwidth resources. These different communication devices have different bandwidth requirements. However, when the different communication devices are used at a same time, a device having a low bandwidth requirement may preempt a frequency band resource of a device having a high bandwidth requirement. This adversely affects user experience of the device having a high bandwidth requirement. The 6 GHz frequency band is a relatively idle frequency band. When a communication system that supports Wi-Fi 6E is used, the conventional frequency bands of 2.4 GHz and 5 GHz may be allocated to devices that do not have a high performance requirement, and the 6 GHz frequency band is allocated to devices that have a high performance requirement, so that each device can take what the device needs. In this embodiment of this application, Wi-Fi 5G may be the 5G frequency band in Table 1, and Wi-Fi 6G may be the 6G frequency band in Table 1.

There may be two interference mechanisms for the coexistence interference problem between the two channels in the existing radio frequency system. In a first interference mechanism, a Wi-Fi 6G signal sent by the channel 1 is an interference signal for a Wi-Fi 5G signal received by the channel 2 (the interference signal in this embodiment of this application may be an unwanted signal or noise). Similarly, the Wi-Fi 5G signal sent by the channel 2 is an interference signal for the Wi-Fi 6G signal sent by the channel 1. However, a Wi-Fi 5G highband and a Wi-Fi 6G lowband each have only a 20 MHz guard band (guard band). The Wi-Fi 5G highband is close to the Wi-Fi 6G lowband. Operating frequency bands of any two channels in the radio frequency system of the communication device are respectively a Wi-Fi 5G highband and a Wi-Fi 6G lowband. Because the two frequency bands are relatively close, sensitivity of the radio frequency system is degraded. The sensitivity of the radio frequency system refers to a capability of the RF transceiver circuit in the radio frequency system to receive weak signals. Improving the sensitivity of the radio frequency system can improve the capability of the radio frequency system to capture weak signals.

It is assumed that in the existing radio frequency system, the channel 1 sends a Wi-Fi 6G low frequency signal, and the channel 2 receives a Wi-Fi 5G high frequency signal. When the channel 2 receives a signal of a Wi-Fi 5G frequency band, power of an interference signal is too large, which affects receiving sensitivity of the Wi-Fi 5G frequency band. This type of interference signal is referred to as a blocker (blocker) signal. The Wi-Fi 6G low frequency signal sent by the channel 1 is 5955 MHz. To be specific, for a Wi-Fi 5G signal received by the channel 2, a frequency of a blocker signal generated when the channel 1 sends the signal is 5955 MHz. Table 2 shows an impact of different power of the blocker signal on sensitivity of the channel 2 to receive signals at different frequencies. Table 2 shows sensitivity of a Wi-Fi 5G receive frequency band when a signal of the Wi-Fi 5G receive frequency band is processed by using a manner corresponding to a level 7 of a modulation and coding scheme (modulation and coding scheme, MCS) in a Wi-Fi protocol. When the channel 1 does not generate any blocker signal, and the channel 2 receives a plurality of frequencies in the Wi-Fi 5G receive frequency band, receiving sensitivity of the channel 2 is -79 dBm. A larger power (signal strength or level) of a blocker signal generated when the channel 1 sends a signal indicates a greater negative impact on sensitivity of each frequency in a receive frequency band of the channel 2, or a higher sensitivity degradation degree of the channel 2.

**Table 2**

| Blocker signal of a Wi-Fi 6G send frequency band | | Sensitivity of a Wi-Fi 5G receive frequency band (dBm) | | |
|---|---|---|---|---|
| Frequency (MHz) | Power (power) | 5825 MHz | 5725 MHz | 5600 MHz |
| 5955 | -40 dBm | -73 | -76 | -78 |
| 5955 | -35 dBm | -63 | -71 | -77 |
| 5955 | -30 dBm | -53 | -66 | -76 |
| No blocker signal | | -79 | -79 | -79 |

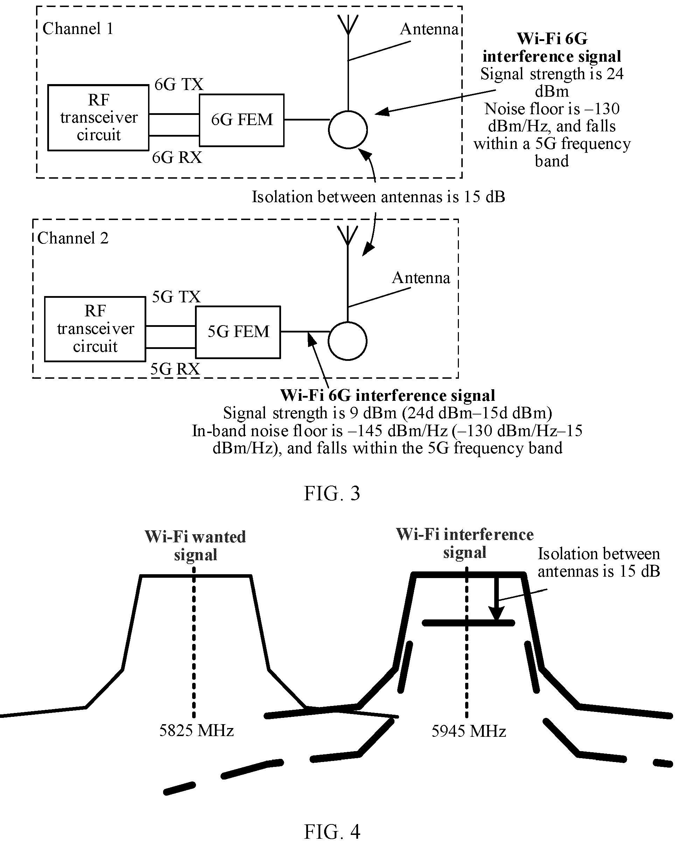

As shown in FIG. 3, in an existing radio frequency system, when there is no filter between an antenna (Ant) and a radio frequency front end module in each channel, a signal of a Wi-Fi 6G frequency band sent by a channel 1 is an interference signal for a signal of a Wi-Fi 5G frequency band received by a channel 2. Power of the interference signal is 24 dBm. When isolation between antennas in the channel 1 and the channel 2 is 15 dB, power of an interference signal at a receive end of a 5G FEM in the channel 2 is 9 dBm (that is, 24 dBm-15 dBm), which is greater than a value (-35 dBm) required by a down-conversion circuit in an RF transceiver circuit for the power of the interference signal. Consequently, processing of the signal of the Wi-Fi 5G frequency band by the down-conversion circuit in the RF transceiver circuit in the channel 2 is affected, a throughput rate of the existing radio frequency system receiving a signal deteriorates sharply, and user experience is severely affected.

In a second interference mechanism, as shown in FIG. 4, a noise floor (noise floor), that is, intrinsic noise, generated when the channel 1 sends the signal of the Wi-Fi 6G frequency band may include interference of at least one frequency, and the frequency may fall within the Wi-Fi 5G frequency band of the channel 2. A frequency of a Wi-Fi interference signal represented by a thick solid line in FIG. 3 is around 5945 MHz, and falls within a band of a channel in which 5825 MHz of the Wi-Fi 5G frequency band of the channel 2 is located, that is, the interference signal is an in-band noise floor (in-band noise floor) of the Wi-Fi 5G frequency band. Power density of the Wi-Fi interference signal around 5945 MHz is subject to isolation between the antenna in the channel 1 and the antenna in the channel 2, and an attenuated power density is still large (corresponding to signals represented by dashed lines in FIG. 3), and affects in-band signal processing of the channel in which the 5825 MHz signal of the Wi-Fi 5G frequency band in the channel 2 is located.

Refer to FIG. 3, in the existing radio frequency system, when there is no filter between an antenna in each channel and a radio frequency front end module, interference (interference signal) of at least one frequency included in the noise floor generated when the channel 1 sends the Wi-Fi 6G signal falls within the Wi-Fi 5G frequency band, with power density of -130 dBm/Hz. When the isolation between the antenna in the channel 1 and the antenna in the channel 2 is 15 dB, the power density of the interference signal is -145 dBm/Hz (-130 dBm/Hz-15 dBm/Hz), which is greater than a value (-183 dBm/Hz) required by the RF transceiver circuit for the in-band noise floor. Consequently, the down-conversion circuit in the RF transceiver circuit in the channel 2 is affected, a throughput rate of the radio frequency system receiving a signal deteriorates sharply, and user experience is severely affected.

In view of this, this application further provides a coexistence interference suppression solution, so that an interference signal can be attenuated by increasing isolation of the radio frequency front end module 10, thereby avoiding an excessively high power of the interference signal or an excessively high power density of the interference signal in an operating band of the down-conversion circuit, and preventing the interference signal from affecting operation of the down-conversion circuit.

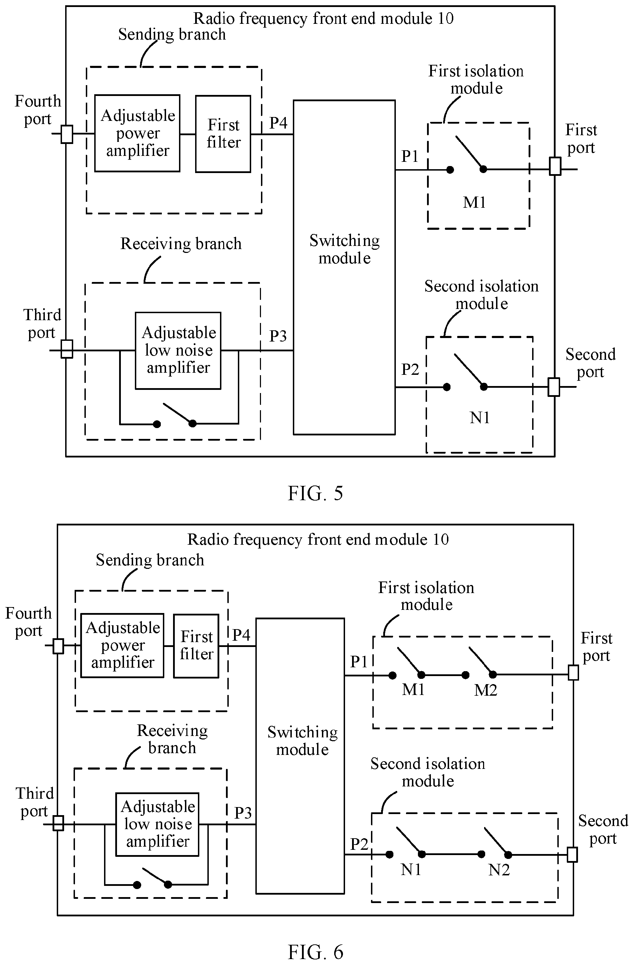

As shown in FIG. 5, based on the structure of the radio frequency front end module 10, the radio frequency front end module 10 may further include a first isolation module and a second isolation module. The first port may be coupled to the switching module through the first isolation module. The second port may be coupled to the switching module through the second isolation module.

In this embodiment of this application, the first isolation module may be configured to selectively connect or isolate the first port to/from the switching module. The first isolation module may have a function or capability of connecting the first port to the switching module, and may transmit the signal of the first frequency band to the switching module. The first isolation module may also have a function or capability of isolating the first port from the switching module. The first isolation module may disconnect the first port from the switching module.

When the receiving branch is connected to the second port and the signal of the second frequency band is received through the second port, the first isolation module may isolate the first port from the switching module, and isolation of the first isolation module may have an isolation function or effect on an interference signal. In this embodiment of this application, the isolation of the first isolation module may be a ratio of power of a signal input to the first isolation module to power of a signal output by the first isolation module, or a difference between power of a signal input to the first isolation module and power of a signal output by the first isolation module.

In an example, the first isolation module isolates the interference signal, so that power of the isolated interference signal at the receiving branch is attenuated below a preset first power threshold (the power of the isolated interference signal is less than the first power threshold). In this example, the interference signal is any signal received by the first port (in this case, the receiving branch receives the signal of the second frequency band through the second port). The power of the interference signal may be any value. The first isolation module isolates the first port from the switching module, so that the power of the interference signal is attenuated. It should be noted that, if the interference signal may be a signal with an excessively high power, for example, the foregoing blocker signal and a signal that may block the down-conversion circuit in the RF transceiver circuit. The first isolation module isolates the interference signal, to attenuate the power of the interference signal and thereby prevent the interference signal from blocking the down-conversion circuit in the RF transceiver circuit. It can be learned that the radio frequency front end module 10 provided in this embodiment of this application may have a strong coexistence interference suppression capability.

In some scenarios, the first power threshold may represent minimum power of the interference signal that affects processing of the signal of the second frequency band by the receiving branch (or processing of the signal of the second frequency band by the down-conversion circuit in the RF transceiver circuit). In other words, if the power of the interference signal is greater than or equal to the first power threshold, the interference signal affects a processing process or a processing effect of processing the signal of the second frequency band by the receiving branch (or the down-conversion circuit in the RF transceiver circuit) in the radio frequency front end module 10. If the power of the interference signal is less than the first power threshold, the interference signal does not affect the processing process or the processing effect of processing the signal of the second frequency band by the receiving branch (or the down-conversion circuit in the RF transceiver circuit) in the radio frequency front end module 10. It can be learned that in this embodiment of this application, the first isolation module isolates the interference signal at the first port, and power of the attenuated interference signal at an input end of the receiving branch neither affects how the receiving branch processes the signal of the first frequency band received by the second port, nor affects how the down-conversion circuit in the RF transceiver circuit processes the signal of the second frequency band.

In another example, the first isolation module isolates the interference signal, so that the power density of the isolated interference signal in the second frequency band may be below a preset first power density threshold. For example, the power density of the isolated interference signal at the receiving branch (in the second frequency band) is less than the first power density threshold.

In a possible case, part of the frequency of the interference signal received by the first port may fall within a range of the second frequency band, and the interference signal may cause the foregoing coexistence problem. The first isolation module can reduce the power density of the interference signal, to avoid the foregoing coexistence problem, to be specific, an impact of the interference signal on processing of the signal of the second frequency band by the down-conversion circuit in the RF transceiver circuit. In another possible case, the whole frequency of the interference signal received by the first port is not within the range of the second frequency band, and the foregoing coexistence problem does not occur. The first isolation module may also reduce the power density of the interference signal. It can be learned that the radio frequency front end module 10 provided in this embodiment of this application may have a strong coexistence interference suppression capability.

In some scenarios, the first power density threshold may represent minimum power density of the interference signal that affects processing of the signal of the second frequency band by the receiving branch (or processing of the signal of the second frequency band by the down-conversion circuit in the RF transceiver circuit). Impact of a relationship between the power density of the interference signal and the first power density threshold on processing of the signal of the second frequency band by the receiving branch (or processing of the signal of the second frequency band by the frequency conversion circuit in the RF transceiver circuit) is similar to impact of a relationship between the interference signal and the first power threshold on processing of the signal of the second frequency band by the receiving branch. Details are not described herein again.

In this embodiment of this application, the second isolation module may be configured to selectively connect or isolate the first port to/from the switching module. The second isolation module may have a function or capability of connecting the second port to the switching module, and may transmit the signal of the second frequency band to the switching module. The second isolation module may also have a function or capability of isolating the second port from the switching module. The second isolation module may disconnect the second port from the switching module. When the receiving branch receives the signal of the first frequency band through the first port, and the second isolation module may isolate the second port from the switching module, isolation of the second isolation module may have an isolation function or effect on an interference signal. In this embodiment of this application, the isolation of the second isolation module may be a ratio of power of a signal input to the second isolation module to power of a signal output by the second isolation module, or a difference between power of a signal input to the second isolation module and power of a signal output by the second isolation module.

In an example, the second isolation module isolates the interference signal, so that the power of the isolated interference signal at the receiving branch is attenuated below a preset second power threshold (the power of the isolated interference signal is less than the second power threshold). In this example, the interference signal is any signal received by the second port (in this case, the receiving branch receives the signal of the first frequency band through the first port). The power of the interference signal may be any value. The second isolation module isolates the second port from the switching module, so that the power of the interference signal is attenuated. It should be noted that, if the interference signal may be a signal with an excessively high power, for example, the foregoing blocker signal and a signal that may block the down-conversion circuit in the RF transceiver circuit. The second isolation module isolates the interference signal, to attenuate the power of the interference signal and thereby prevent the interference signal from blocking the down-conversion circuit in the RF transceiver circuit. It can be learned that the radio frequency front end module 10 provided in this embodiment of this application may have a strong coexistence interference suppression capability.

In some scenarios, the second power threshold may represent minimum power of the interference signal that affects processing of the signal of the first frequency band by the receiving branch (or processing of the signal of the first frequency band by the down-conversion circuit in the RF transceiver circuit). In other words, if the power of the interference signal is greater than or equal to the second power threshold, the interference signal affects a processing process or a processing effect of processing the signal of the first frequency band by the receiving branch (or the down-conversion circuit in the RF transceiver circuit) in the radio frequency front end module 10. If the power of the interference signal is less than the second power threshold, the interference signal does not affect the processing process or the processing effect of processing the signal of the first frequency band by the receiving branch (or the down-conversion circuit in the RF transceiver circuit) in the radio frequency front end module 10. It can be learned that in this embodiment of this application, the second isolation module isolates the interference signal at the second port, and power of the attenuated interference signal at the input end of the receiving branch neither affects how the receiving branch processes the signal of the second frequency band received by the first port, nor affects how the down-conversion circuit in the RF transceiver circuit processes the signal of the first frequency band.

In another example, the second isolation module isolates the interference signal, so that the power density of the isolated interference signal in the first frequency band may be below a preset second power density threshold. For example, the power density of the isolated interference signal at the receiving branch (in the first frequency band) is less than the second power density threshold.

In some scenarios, the second power density threshold may represent minimum power density of the interference signal that affects processing of the signal of the first frequency band by the receiving branch (or processing of the signal of the first frequency band by the down-conversion circuit in the RF transceiver circuit). Impact of a relationship between the power density of the interference signal and the second power density threshold on processing of the signal of the first frequency band by the receiving branch (or processing of the signal of the first frequency band by the frequency conversion circuit in the RF transceiver circuit) is similar to impact of a relationship between the interference signal and the second power threshold on processing of the signal of the first frequency band by the receiving branch. Details are not described herein again.

In a possible case, part of the frequency of the interference signal received by the second port may fall within a range of the first frequency band, and the interference signal may cause the foregoing coexistence problem. The second isolation module can reduce the power density of the interference signal, to avoid the foregoing coexistence problem, that is, an impact of the interference signal on processing of the signal of the first frequency band by the down-conversion circuit in the RF transceiver circuit. In another possible case, the whole frequency of the interference signal received by the second port is not within the range of the first frequency band, and the foregoing coexistence problem does not occur. The second isolation module may also reduce the power density of the interference signal. It can be learned that the radio frequency front end module 10 provided in this embodiment of this application may have a strong coexistence interference suppression capability.

In a possible design, the first power threshold or the second power threshold may be a power threshold of a blocker signal at the receiving branch of the radio frequency front end module 10 in a communication protocol or a communication standard, or a power threshold of a blocker signal at the down-conversion in the RF transceiver circuit. For example, the radio frequency front end module 10 provided in this application is applied to a scenario in which a Wi-Fi 5G radio frequency system and a Wi-Fi 6G radio frequency system are supported. The first power threshold or the second power threshold may be -35 dBm.

The first power density threshold or the second power density threshold may be a power density threshold of an interference signal at the receiving branch of the radio frequency front end module 10 in the communication protocol or the communication standard, or a power density threshold of an interference signal at the down-conversion in the RF transceiver circuit. For example, the radio frequency front end module 10 provided in this application is applied to the scenario in which the Wi-Fi 5G radio frequency system and the Wi-Fi 6G radio frequency system are supported. The first power density threshold or the second power density threshold may be -183 dBm.

The signal splitter connected to the radio frequency front end module 10 provides the signal of the first frequency band for the first port or provides the signal of the second frequency band for the second port. Based on the foregoing description of the structure of the radio frequency front end module 10 and the foregoing introduction of the modules, it should be understood that the radio frequency front end module 10 provided in this application may be in a first frequency band receiving state, and the first isolation module connects the first port to the switching module. The switching module is connected to the receiving module. The signal of the first frequency band received at the first port is transmitted to the receiving branch through the first isolation module and the switching module. The receiving branch may perform signal processing on the signal of the first frequency band, and transmit a processed signal to the down-conversion circuit of the RF transceiver circuit through the third port. In this case, the second isolation module isolates the second port from the switching module.

The radio frequency front end module 10 provided in this application may be in a second frequency band receiving state, and the second isolation module connects the second port to the switching module. The switching module is connected to the receiving module. The signal of the second frequency band received at the second port is transmitted to the receiving branch through the second isolation module and the switching module. The receiving branch may perform signal processing on the signal of the second frequency band, and transmit a processed signal to the down-conversion circuit of the RF transceiver circuit through the third port. In this case, the first isolation module isolates the second port from the switching module.

Compared with the existing radio frequency front end module 10, the radio frequency front end module 10 provided in this application occupies less space. In addition, when the radio frequency front end module 10 is applied to the radio frequency system, a changeover switch does not need to be added between the RF transceiver circuit and the radio frequency front end module 10, thereby reducing board-level costs, and a GPIO does not need to be added to an SOC chip, thereby lowering package costs of the SOC chip. In addition, the radio frequency front end module 10 provided in this embodiment of this application may support signal receiving and sending processes of a plurality of frequency bands. For example, the signal of the first frequency band and the signal of the second frequency band are supported. The radio frequency front end module 10 provided in this embodiment of this application may have a strong coexistence interference suppression capability.

It is assumed that in a scenario in which the first frequency band is a Wi-Fi 5G frequency band and the second frequency band is a Wi-Fi 6G frequency band, the radio frequency front end module 10 is applied to a radio frequency system running in a DBDC mode of the Wi-Fi 5G frequency band and the Wi-Fi 6G frequency band. When the first port of the radio frequency front end module 10 receives a signal of the Wi-Fi 5G frequency band, the second port may receive an interference signal of the Wi-Fi 6G frequency band. In this case, the second isolation module in the radio frequency front end module 10 isolates the second port from the switching module, to reduce power or the power density of the interference signal and thereby avoid an impact of the interference signal of the Wi-Fi 6G frequency band on processing of the signal of the Wi-Fi 5G frequency band by the receiving branch (or the down-conversion circuit of the RF transceiver circuit) in the radio frequency front end module 10. Similarly, when the second port of the radio frequency front end module 10 receives a signal of the Wi-Fi 6G frequency band, the first port may receive an interference signal of the Wi-Fi 5G frequency band. In this case, the first isolation module in the radio frequency front end module 10 isolates the first port from the switching module, to reduce power or the power density of the interference signal and thereby avoid an impact of the interference signal of the Wi-Fi 5G frequency band on processing of the signal of the Wi-Fi 6G frequency band by the receiving branch (or the down-conversion circuit of the RF transceiver circuit) in the radio frequency front end module 10.

In a possible implementation, the first isolation module may include a switch. As shown in FIG. 5, one end of a switch M1 is connected to a first end P1 of the switching module, and another end of the switch M1 is connected to the first port. When the switch M1 is in an on state, the first port may be connected to the switching module. When the switch M1 is in an off state, the first port may be disconnected (or isolated) from the switching module. In this embodiment of this application, the switch M1 may be a single-pole single-throw switch, a single-pole multi-throw switch, a multi-pole multi-throw switch, or the like, and has the foregoing function or capability of the switch M1, to selectively connect or disconnect the first port and the switching module.

In this example, isolation of the switch M1 may be the isolation of the first isolation module. In this application, isolation may also exist between different antennas, between different radio frequency cables, or between different ports of a switch. For example, the isolation between antennas may refer to a ratio of power of a signal sending antenna sending a signal to power of a signal receiving antenna receiving the signal, or a difference between power of a signal sending antenna sending a signal and power of a signal receiving antenna receiving the signal. The isolation of a switch may refer to a ratio of power of a signal input port of the switch receiving a signal to power of a signal output port of the switch sending the signal, or a difference between power of a signal input port of the switch receiving a signal and power of a signal output port of the switch sending the signal. The isolation between different radio frequency cables may refer to a ratio of power of a cable receiving a signal transmitted by another cable to power of the another cable transmitting the signal, or a difference between power of a cable receiving a signal transmitted by another cable and power of the another cable transmitting the signal.

The second isolation module may include at least one switch. As shown in FIG. 5, one end of a switch N1 is connected to a second end P2 of the switching module, and another end of the switch N1 is connected to the second port. When the switch N1 is in an on state, the second port may be connected to the switching module. When the switch N1 is in an off state, the second port may be disconnected (or isolated) from the switching module. In this embodiment of this application, the switch N1 may be a single-pole single-throw switch, a single-pole multi-throw switch, a multi-pole multi-throw switch, or the like, and has the foregoing function or capability of the switch N1, to selectively connect or disconnect the second port and the switching module. In this example, isolation of the switch N1 may be the isolation of the second isolation module.

In still another possible implementation, the isolation of the first isolation module may be adjustable. For example, the first isolation module may include a plurality of switches. The first isolation module may selectively adjust the isolation. Refer to FIG. 6. A first isolation module may include a plurality of switches, for example, a switch M1 and a switch M2 connected in series. In the first isolation module, when the switch M1 is in an on state and the switch M2 is in an off state, isolation of the first isolation module is isolation of the isolation switch M2. In the first isolation module, when the switch M2 is in the on state and the switch M1 is in the off state, the isolation of the first isolation module is isolation of the switch M1. In the first isolation module, when the switch M1 is in the off state, and the switch M2 is in the off state, the isolation of the first isolation module may be a sum of the isolation of the switch M2 and the isolation of the switch M1. When the isolation of the first isolation module is different, a degree of attenuating power or power density of an interference signal is different. In the first isolation module, when the switch M1 is in the on state, and the switch M2 is in the on state, the degree of attenuating the interference signal by the first isolation module is zero.

It can be learned that, when including a plurality of switches, the first isolation module may be switched to adjust, by switching an on/off state of each switch, the degree of attenuating the interference signal. For example, the first isolation module may selectively adjust an degree of attenuating an interference signal received by the first port. It should be understood that a higher degree of attenuating, by the first isolation module, the interference signal received by the first port may reflect a stronger capability of reducing the power or the power density of the interference signal. Similarly, the isolation of the second isolation module may be adjustable. For example, the second isolation module may include a plurality of switches. The second isolation module may selectively adjust the isolation. Refer to FIG. 6. A second isolation module may include a plurality of switches, for example, a switch N1 and a switch N2 connected in series. In the second isolation module, when the switch N1 is in an on state, and the switch N2 is in an off state, isolation of the second isolation module is isolation of the switch M2. In the second isolation module, when the switch N2 is in the on state, and the switch N1 is in the off state, the isolation of the second isolation module is isolation of the switch N1. In the second isolation module, when the switch N1 is in the off state, and the switch N2 is in the off state, the isolation of the second isolation module may be a sum of the isolation of the switch N2 and the isolation of the switch N1. When the isolation of the second isolation module is different, a degree of attenuating power or power density of an interference signal is different. In the second isolation module, when the switch M1 is in the on state, and the switch M2 is in the on state, the degree of attenuating the interference signal by the second isolation module is zero.

It can be learned that, when including a plurality of switches, the second isolation module may be switched to adjust, by switching an on/off state of each switch, the degree of attenuating the interference signal. For example, the second isolation module may selectively adjust a degree of attenuating an interference signal received by the second port. It should be understood that a higher degree of attenuating, by the second isolation module, the interference signal received by the second port may reflect a stronger capability of reducing the power or the power density of the interference signal.

Based on any radio frequency front end module 10 provided in the foregoing embodiment, the switching module may selectively connect any port to either of the sending branch or the receiving branch through a plurality of changeover switches.

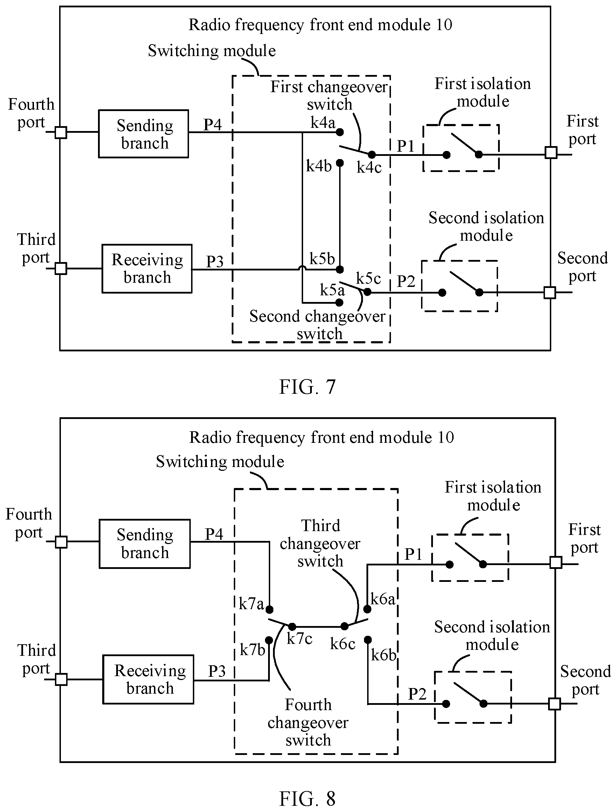

In a possible design, the switching module may include at least two changeover switches, namely a first changeover switch and a second changeover switch. In an example, the radio frequency front end module 10 includes the first isolation module. As shown in FIG. 7, a first changeover switch may be separately coupled to a first isolation module, a sending branch, and a receiving branch. The first changeover switch may connect either of the sending branch or the receiving branch to the first isolation module, and isolate the other of the sending branch or the receiving branch from the first isolation module. In other words, the first changeover switch may selectively connect either of the sending branch or the receiving branch to the first isolation module. For example, when the first changeover switch connects the sending branch to the first isolation module, the receiving branch may be isolated from the first isolation module. Similarly, when the first changeover switch connects the receiving branch to the first isolation module, the sending branch may be isolated from the first isolation module.

The first changeover switch may be a single-pole multi-throw switch. A movable end k4c of the first changeover switch is coupled to the first isolation module, a first contact end k4a of the first changeover switch is coupled to the sending branch, and a second contact end k4b of the first changeover switch is coupled to the receiving branch. When the movable end k4c of the first changeover switch is connected to the first contact end k4a, the first isolation module may be connected to the sending branch. In this case, the movable end k4c of the first changeover switch is disconnected from the second contact end k4b, so that the receiving branch is isolated from the first isolation module, and power of an interference signal can be reduced (or attenuated). When the movable end k4c of the first changeover switch is connected to the second contact end k4b, the first isolation module may be connected to the receiving branch. In another example, the radio frequency front end module 10 does not include the first isolation module. The first changeover switch may be separately coupled to a first port, the sending branch, and the receiving branch. The first changeover switch may connect either of the sending branch or the receiving branch to the first port, and isolate the other of the sending branch or the receiving branch from the first port. In other words, the first changeover switch may selectively connect either of the sending branch or the receiving branch to the first port. For example, when the first changeover switch connects the sending branch to the first port, the receiving branch may be isolated from the first port. Similarly, when the first changeover switch connects the receiving branch to the first port, the sending branch may be isolated from the first port.

Similarly, in an example, the radio frequency front end module 10 includes the second isolation module. As shown in FIG. 7, a second changeover switch may be separately coupled to a second isolation module, the sending branch, and the receiving branch. The second changeover switch may connect either of the sending branch or the receiving branch to the second isolation module, and isolate the other of the sending branch or the receiving branch from the second isolation module. In other words, the second changeover switch may selectively connect either of the sending branch or the receiving branch to the second isolation module. For example, when the second changeover switch connects the sending branch to the second isolation module, the receiving branch may be isolated from the second isolation module. Similarly, when the second changeover switch connects the receiving branch to the first isolation module, the sending branch may be isolated from the second isolation module.

The second changeover switch may be a single-pole multi-throw switch. A movable end k5c of the second changeover switch is coupled to the first isolation module, a first contact end k5a of the second changeover switch is coupled to the sending branch, and a second contact end k5b of the second changeover switch is coupled to the receiving branch. When the movable end k5c of the second changeover switch is connected to the first contact end k5a, the second isolation module may be connected to the sending branch. In this case, the movable end k5c of the second changeover switch is disconnected from the second contact end k5b, so that the receiving branch is isolated from the second isolation module, and power of an interference signal can be reduced (or attenuated). When the movable end k5c of the second changeover switch is connected to the second contact end k5b, the second isolation module may be connected to the receiving branch.

In some examples, to reduce cables in the radio frequency front end module 10, the second contact end k4b of the first changeover switch may be directly coupled to the second contact end k5b of the second changeover switch, and the second contact end k4b of the first changeover switch is coupled to the receiving branch through the second contact end k5b of the second changeover switch.

In an example, the radio frequency front end module 10 does not include the second isolation module. The second changeover switch may be separately coupled to a second port, the sending branch, and the receiving branch. The second changeover switch may connect either of the sending branch or the receiving branch to the second port, and isolate the other of the sending branch or the receiving branch from the second port. In other words, the second changeover switch may selectively connect either of the sending branch or the receiving branch to the second port. For example, when the second changeover switch connects the sending branch to the second port, the receiving branch may be isolated from the second port. Similarly, when the second changeover switch connects the receiving branch to the second port, the sending branch may be isolated from the second port.

In another possible design, the switching module may include a third changeover switch and a fourth changeover switch. In an example, the radio frequency front end module 10 includes the first isolation module and the second isolation module. As shown in FIG. 8, a third changeover switch is coupled to a first isolation module, a second isolation module, and a fourth changeover switch, and is configured to connect either of the first isolation module or the second isolation module to the fourth changeover switch, and isolate the other of the first isolation module or the second isolation module from the fourth changeover switch. For example, when the third changeover switch connects the fourth changeover switch to the first isolation module, the fourth changeover switch may be isolated from the second isolation module. In this case, the third changeover switch isolates the fourth changeover switch from the second isolation module, and may also reduce power or power density of an interference signal. Similarly, when the third changeover switch connects the fourth changeover switch to the second isolation module, the fourth changeover switch may be isolated from the first isolation module. In this case, a structure in which the third changeover switch isolates the fourth changeover switch from the first isolation module can reduce power or power density of an interference signal that enters the fourth changeover switch.

The fourth changeover switch is coupled to the sending branch, the receiving branch, and the third changeover switch, and is configured to connect either of the sending branch or the receiving branch to the third changeover switch. For example, when the fourth changeover switch connects the third changeover switch to the sending branch, the third changeover switch may be isolated from the receiving branch. When the fourth changeover switch connects the third changeover switch to the receiving branch, the third changeover switch may be isolated from the sending branch.

The third changeover switch may be a single-pole multi-throw switch. The fourth changeover switch may be a single-pole multi-throw switch. Refer to FIG. 5. A movable end k6c of the third changeover switch is coupled to a movable end k7c of the fourth changeover switch, a fifth contact end k6a of the third changeover switch is coupled to the first isolation switch, and a sixth contact end k6b of the third changeover switch is coupled to the second isolation switch. A seventh contact end k7a of the fourth changeover switch is coupled to the sending branch, and an eighth contact end k7b of the fourth changeover switch is coupled to the receiving branch.

When the movable end k6c of the third changeover switch is connected to the fifth contact end k6a, the first isolation module may be connected to the fourth changeover switch. When the movable end k6c of the third changeover switch is connected to the sixth contact end k6b, the second isolation module may be connected to the fourth changeover switch. When the movable end k7c of the fourth changeover switch is connected to the seventh contact end k7a, the sending branch may be connected to the third changeover switch. When the movable end k7c of the fourth changeover switch is connected to the eighth contact end k7b, the receiving branch may be connected to the third changeover switch.

In an example, the radio frequency front end module 10 does not include the first isolation module and the second isolation module. The third changeover switch is coupled to a first port, a second port, and the fourth changeover switch, and is configured to connect either of the first port or the second port to the fourth changeover switch, and isolate the other of the first port or the second port from the fourth changeover switch. For example, when the third changeover switch connects the fourth changeover switch to the first port, the fourth changeover switch may be isolated from the second port. In this case, the third changeover switch isolates the fourth changeover switch from the second port, and may also reduce power or power density of an interference signal. Similarly, when the third changeover switch connects the fourth changeover switch to the second port, the fourth changeover switch may be isolated from the first port. In this case, a structure in which the third changeover switch isolates the fourth changeover switch from the first port can reduce power or power density of an interference signal that enters the fourth changeover switch.

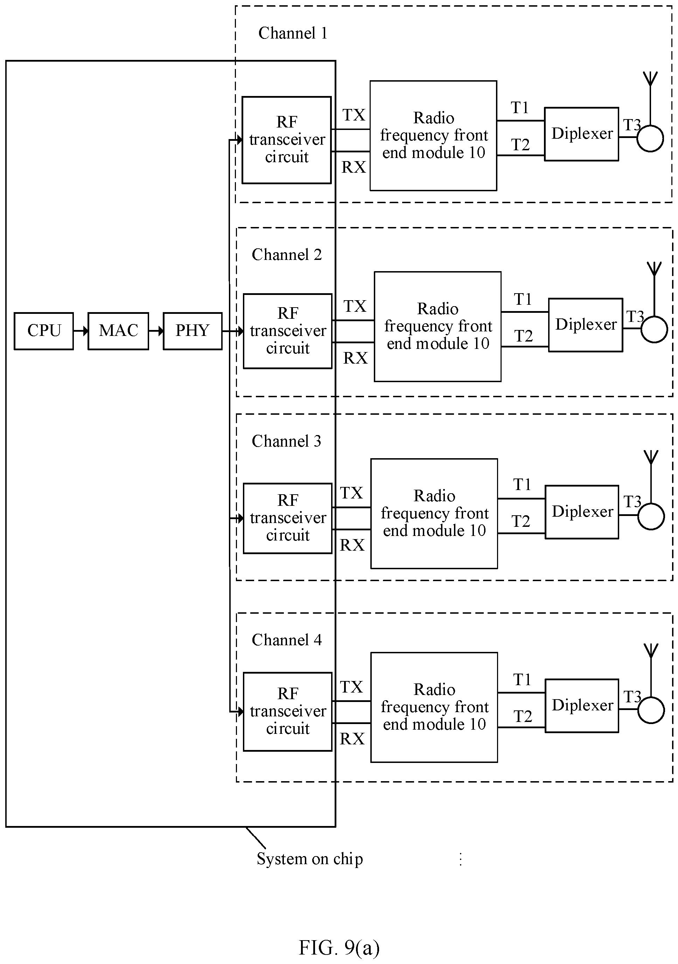

This application further provides a communication device. The communication device may include a Wi-Fi chip and the radio frequency front end module 10 in any one of the foregoing embodiments. As shown in FIG. 9(a), the Wi-Fi chip may be a system on chip, including a plurality of RF transceiver circuits and a baseband signal processor. The baseband signal processor may include the foregoing PHY, MAC, CPU, and the like. The plurality of RF transceiver circuits may correspond to a plurality of radio frequency front end modules 10. Each RF transceiver circuit is connected to a corresponding front end module 10. For example, in each RF transceiver circuit, a port TX of an up-conversion circuit is connected to a fourth end of the radio frequency front end module 10, and a port RX of a down-conversion circuit is connected to a third end of the radio frequency front end module 10.

In the communication device provided in embodiments of this application, the radio frequency front end module 10 occupies less space, and a changeover switch does not need to be added between the RF transceiver circuit and the radio frequency front end module 10, thereby reducing board-level costs, and a GPIO does not need to be added to the Wi-Fi chip, thereby lowering package costs of the Wi-Fi chip.

In a possible design, each radio frequency front end module 10 in the communication device may be a radio frequency front end module including a first isolation module and a second isolation module. The communication device provided in embodiments of this application has a good coexistence interference suppression function or capability. For ease of description, a receiving/sending link formed by the radio frequency front end module 10 in the communication device and a connected RF transceiver circuit is referred to as a channel.

Refer to FIG. 9(a). Each channel may include an RF transceiver circuit, a radio frequency front end module 10, a diplexer (or a signal splitter), and an antenna. A port (TX) of an up-conversion circuit of the RF transceiver circuit in each channel is coupled to a fourth port of the radio frequency front end module 10. A port (RX) of a down-conversion circuit of the RF transceiver circuit is coupled to a third port of the radio frequency front end module 10. A first port of the radio frequency front end module 10 is coupled to a first end T1 of the diplexer, a second port of the radio frequency front end module is coupled to a second end T2 of the diplexer, and a third end T3 of the diplexer is coupled to the antenna.

The radio frequency front end module 10 in each channel may be any one of the radio frequency front end modules 10 shown in FIG. 2 and FIG. 5 to FIG. 8. For ease of describing a strong coexistence interference suppression capability of a radio frequency system channel provided in embodiments of this application, the following uses the structure of the radio frequency front end module 10 shown in FIG. 5 as an example for description. An example in which a first frequency band and a second frequency band are respectively a 5G frequency band and a 6G frequency band is used for description.

Refer to FIG. 9(b)-1 and FIG. 9(b)-2. Two channels in the communication device are respectively denoted as a channel 3 and a channel 4. It is assumed that the channel 3 sends a signal of the 6G frequency band, and the channel 4 receives a signal of the Wi-Fi 5G frequency band. In this case, the movable end k5c of the second changeover switch in the radio frequency front end module 10 of the channel 3 is connected to the contact end k5a, and the second isolation module connects the second port to the movable end k5c of the second changeover switch. The up-conversion circuit of the RF transceiver circuit, the sending branch in the radio frequency front end module 10, the second changeover switch, the second isolation module, the diplexer, and the antenna form a sending path, and the signal of the Wi-Fi 6G frequency band is sent through the formed sending path.

The movable end k4c of the first changeover switch in the radio frequency front end module 10 of the channel 4 is connected to the contact end k4b, and the first isolation module connects the first port to the movable end k4c of the first changeover switch. The down-conversion circuit of the RF transceiver circuit, the receiving branch in the radio frequency front end module 10, the first changeover switch, the first isolation module, the diplexer, and the antenna form a receiving path, and the signal of the 5G frequency band is received through the formed receiving path.

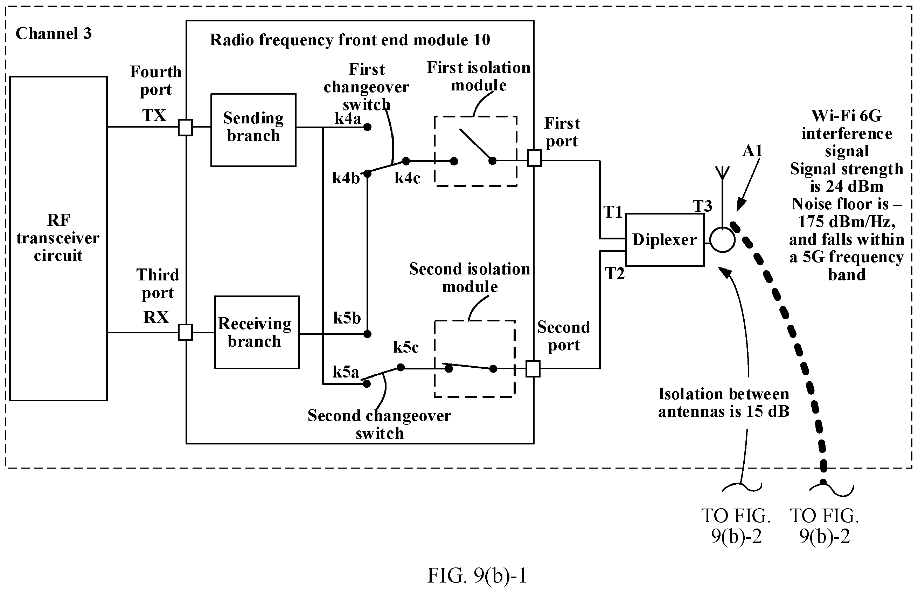

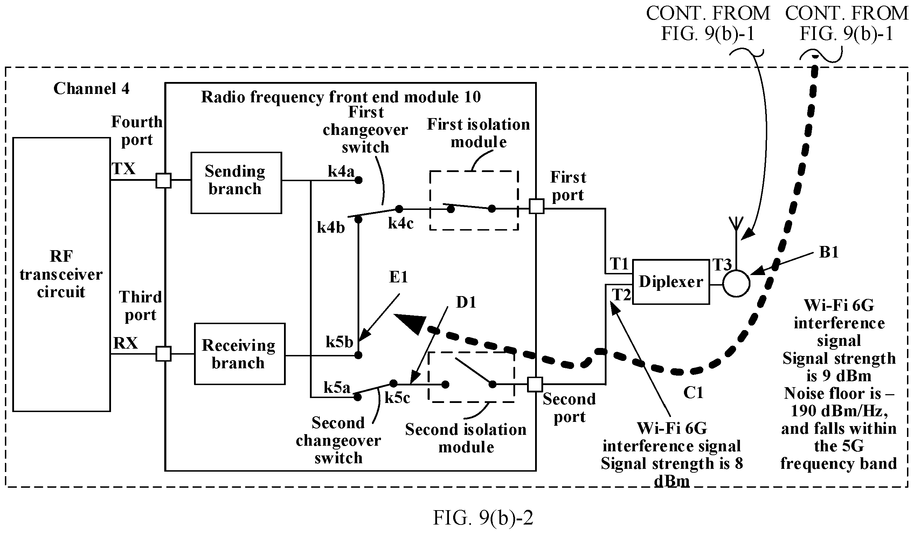

When the channel 3 sends the signal of the Wi-Fi 6G frequency band, a Wi-Fi 6G interference signal (shown at A1 in FIG. 9(b)-1) is generated, and power of the 6G interference signal generated when the channel 3 sends the signal of the Wi-Fi 6G frequency band is Pa. Isolation between the antenna in the channel 3 and the antenna in the channel 4 is Pb. The antenna in the channel 4 may receive the Wi-Fi 6G interference signal (as shown at B1 in FIG. 9(b)-2) generated by the channel 3. In this case, the power of the Wi-Fi 6G interference signal is Pc=Pa-Pb.

The antenna in channel 4 also receives the signal of the Wi-Fi 5G frequency band. The diplexer is configured to input the signal of the Wi-Fi 5G frequency band to the first port of the radio frequency front end module 10, and isolation of the diplexer from the Wi-Fi 6G interference signal is Pd. After the antenna inputs the received Wi-Fi 6G interference signal to the diplexer, the power of the Wi-Fi 6G interference signal (shown at C1 in FIG. 9(b)-2) at the second port of the radio frequency front end module 10 is Pe=Pc-Pd.

In a possible design, in the channel 4, isolation of the second isolation module is Pf, and the second isolation module isolates the Wi-Fi 6G interference signal at a receive end from the second changeover switch. The second isolation module may attenuate power of an interference signal coupled to the second changeover switch, so that the power of the interference signal coupled to the second changeover switch is Pg=Pe-Pf, and Pg does not exceed a second power threshold (which represents minimum power of an interference signal that affects processing of a signal of a 5G frequency band by the receiving branch of the radio frequency front end module 10, or represents a reference power of an interference signal that affects working of the down-conversion circuit in the RF transceiver circuit).

In another possible design, in the channel 4, isolation between the movable end k5c of the second changeover switch and the contact end k5b is Ph, and isolation of the second isolation module is Pf. The second isolation module isolates the Wi-Fi 6G interference signal at the second port from the second changeover switch, so that the power of the interference signal coupled to the second changeover switch is Pg=Pe-Pf. The power of the Wi-Fi 6G interference signal (shown at E1 in FIG. 9(b)-2) coupled to the contact end k5b is Pi=Pg-Ph, and Pi does not exceed a second threshold (which represents minimum power of an interference signal that affects processing of a signal of a 5G frequency band by the receiving branch of the radio frequency front end module 10, or represents reference power of an interference signal that affects working of the down-conversion circuit in the RF transceiver circuit). In this case, both the second isolation module and the second changeover switch in the channel 4 may have an isolation function (or an attenuation function) on the Wi-Fi 6G interference signal.

In such a design, the 6G interference signal generated when the channel 3 sends the signal of the Wi-Fi 6G frequency band is difficult to enter the receiving branch in the radio frequency front end module 10 in the channel 4 or the down-conversion circuit of the RF receiver, thereby preventing the interference signal generated when the channel 3 sends the signal of the Wi-Fi 6G frequency band from blocking the down-conversion circuit of the channel 4 receiving a Wi-Fi 5G signal.

In a test scenario, an in-band loss (loss) of the diplexer is 1 dBm, and out-of-band suppression is greater than 45 dB. The first isolation module may include a single-pole single-throw switch. The second isolation module may include a single-pole single-throw switch. Isolation of each single-pole single-throw switch is greater than 22 dB. Isolation of an SPDT in the switching module is greater than 22 dB. Spacing isolation of antennas between adjacent channels is greater than 15 dB.

In a test, power (Power) of a 6G signal output by the radio frequency front end module 10 is 25 dBm, and a noise floor (noise floor) is -130 dBm/Hz. The signal is output to the antenna through the diplexer and transmitted by the antenna. The power of the interference signal generated when the channel 3 sends the signal of the Wi-Fi 6G frequency band is 24 dBm, as shown at A1 in FIG. 9(b)-1. The isolation between the antennas is 15 dB. As shown at B1 in FIG. 9(b)-2, strength of the interference signal of the Wi-Fi 6G frequency band received by the antenna in the channel 4 is 9 dBm (24 dBm-15 dBm). The isolation of the diplexer from the interference signal of the 6G frequency band is 1 dB. As shown at C1 in FIG. 9(b)-2, an interference power at the second port of the radio frequency front end module 10 is 8 dBm (9 dBm-1 dBm). The isolation of the second isolation module is 22 dB. As shown at D1 in FIG. 9(b)-2, an interference power coupled to the second changeover switch is -14 dBm (8 dBm-22 dBm). The isolation between the movable end k5c of the second changeover switch and the contact end k5b is 22 dB. As shown at E1 in FIG. 9(b)-2, an interference power coupled to the receiving branch is -36 dBm (-14 dBm-22 dBm). In this case, the power of the interference signal at the E1 is less than a reference power (-35 dBm) of the interference signal at the receiving branch.

In a test, the noise floor (noise floor) of the Wi-Fi 6G signal output by the radio frequency front end module 10 is - 130 dBm/Hz. The signal is output to the antenna through the diplexer and transmitted by the antenna. The noise floor generated when the channel 3 sends the signal of the Wi-Fi 6G frequency band, that is, power density of the signal falling within the Wi-Fi 5G frequency band, is -175 dBm/Hz. As shown at A1 in FIG. 9(b)-1, the isolation between the antennas is 15 dB. In other words, power density of the interference signal received by the channel 4 is -190 dBm/Hz (-175-15). As shown at B1 in FIG. 9(b)-2, the power density (noise floor) of the interference signal of the Wi-Fi 6G frequency band received by the antenna in the channel 4 is -190 dBm/Hz. The isolation of the diplexer from the interference signal of the 6G frequency band is 1 dB. The isolation of the second isolation module is 22 dB. The isolation between the movable end k5c of the second changeover switch and the contact end k5b is 22 dB. The power density (noise floor) of the interference signal falling within the Wi-Fi 5G frequency band is -191 dBm/Hz. The interference signal is isolated by the second isolation module and the second changeover switch, and power density (noise floor) of an attenuated interference signal at E1 in FIG. 9(b)-2 is less than a power density threshold or a noise floor threshold (-183 dBm/Hz) of the interference signal at the receiving branch.

In the communication device provided in embodiments of this application, the Wi-Fi chip may include one or more RF transceiver circuits. The communication device may further include a radio frequency front end module 10 connected to each RF transceiver circuit and a signal splitter (or diplexer) corresponding to each radio frequency front end module 10. The Wi-Fi chip may further include a baseband signal processor, and the baseband signal processor may be coupled to each RF transceiver circuit.

Refer to FIG. 10. In a communication device provided in this application, each RF transceiver circuit may include an up-conversion circuit and a down-conversion circuit. A first end T1 of a signal splitter is coupled to a first port of a radio frequency front end module 10, a second end T2 of the signal splitter is coupled to a second port of the radio frequency front end module 10, and a third end T3 of the signal splitter is coupled to an antenna. The down-conversion circuit is coupled to a third port of the radio frequency front end module 10.

When the RF transceiver circuit is in a receiving working condition (a receiving state or a receiving mode), the signal splitter may provide a signal of a first frequency band for the first port, or provide a signal of a second frequency band for the second port. The down-conversion circuit may perform down-mixing processing on a signal processed by the radio frequency front end module 10, and output the signal to the baseband signal processor. The baseband signal processor may process a signal output by the down-conversion circuit, to obtain a baseband signal. Alternatively, the baseband signal processor may receive a baseband signal output by the down-conversion circuit.

The RF transceiver circuit may further include a polyphase filter (polyphase filter, PPF), configured to provide a local-frequency signal for the down-conversion circuit, so that the down-conversion circuit performs down-mixing processing.

The down-conversion circuit may perform, based on the local-frequency signal, down-mixing processing on the signal (for example, the signal of the first frequency band or the signal of the second frequency band) processed by the radio frequency front end module 10. For example, the down-conversion circuit may perform modulation or frequency shifting on a radio frequency signal based on the local-frequency signal, to shift the radio frequency signal to a frequency of the baseband signal, that is, process the radio frequency signal into the baseband signal.

In some examples, with reference to FIG. 10, the down-conversion circuit may include at least a low noise amplifier LNA, a first mixer, a low-pass filter, a variable gain amplifier (variable gain amplifier, VGA), and an analog-to-digital converter. The first mixer is coupled to the PPF.

The analog-to-digital converter, the VGA, the low-pass filter, the first mixer, and the low noise amplifier are sequentially connected in series. The analog-to-digital converter is coupled to the baseband signal processor, and the low noise amplifier is coupled to the third port of the radio frequency front end module 10. The low noise amplifier may amplify a signal from the third port, and output an amplified signal to the first mixer. The first mixer may receive a local-frequency signal provided by the PPF, perform, based on the received local-frequency signal, modulation or frequency shifting on a radio frequency signal output by the low noise amplifier, and output the radio frequency signal to the low-pass filter. The low-pass filter may perform filtering processing on the signal output by the first mixer, to implement noise reduction. The VGA performs gain adjustment on the signal after the noise reduction. Optionally, gain adjustment by the VGA is related to a change of a gain of a signal performed by the low noise amplifier, so that a gain of a signal output by the VGA is a preset gain. A signal output by the VGA to the analog-to-digital converter is an analog signal. Then, the analog signal is converted into a digital signal by the analog-to-digital converter and the digital signal is provided to the baseband signal processor. The baseband signal processor may include the CPU, the MAC layer, and the PHY layer, and may process, based on functions of the CPU, the MAC layer, and the PHY layer, the digital signal provided by the down-conversion circuit.

The RF transceiver circuit may further include an up-conversion circuit. The up-conversion circuit is coupled to a fourth port of the radio frequency front end module 10. When the RF transceiver circuit is in a sending working condition (a sending state or a sending mode), the up-conversion circuit is coupled to the baseband signal processor, and may perform up-mixing processing on a baseband signal provided by the baseband signal processor. For example, the baseband signal is converted into a signal of the first frequency band or a signal of the second frequency band, and a converted signal is provided to the fourth port. The signal splitter may provide, to the antenna, a signal that is output by the first port or the second port and that is processed by the radio frequency front end module 10.

The PPF in the radio frequency apparatus 30 may be further configured to provide a local-frequency signal for the up-conversion circuit, so that the up-conversion circuit performs up-mixing processing. The up-conversion circuit may convert, based on the local-frequency signal provided by the PPF, the baseband signal provided by the baseband signal processor into the signal of the first frequency band or the signal of the second frequency band. For example, the up-conversion circuit may perform modulation or frequency shifting on the baseband signal based on the local-frequency signal, to shift the baseband signal to a frequency of the radio frequency signal, that is, process the baseband signal into the signal of the first frequency band or the signal of the second frequency band.

In some examples, still with reference to FIG. 10, the up-conversion circuit includes at least a power amplifier, a second mixer, and a low-pass filter that are sequentially coupled. The second mixer is coupled to the PPF. A gain of the power amplifier in the up-conversion circuit is less than a gain of a power amplifier in the radio frequency front end module 10. The power amplifier in the up-conversion circuit is configured to perform pre-amplification processing on a sent signal. For ease of differentiation, the power amplifier (or an adjustable power amplifier) in the up-conversion circuit is denoted as a pre power amplifier (pre PA, PPA).

A digital-to-analog converter, the low-pass filter, the second mixer, and the PPA are sequentially connected in series. The digital-to-analog converter is coupled to the baseband signal processor, and the PPA is coupled to the fourth port of the radio frequency front end module 10. The digital-to-analog converter may convert a digital signal from a baseband processing module into an analog signal, which is also a baseband signal. The low-pass filter performs noise reduction on the baseband signal. The second mixer may receive a local-frequency signal provided by the PPF, perform, based on the received local-frequency signal, modulation or frequency shifting on a baseband signal output by the low-pass filter, to form a radio frequency signal, and output the radio frequency signal to the PPA. The PPA may amplify the radio frequency signal. An amplification gain of the PPA for the radio frequency signal is less than an amplification gain of the PA of the radio frequency front end module 10. The PPA outputs the amplified signal to the fourth port of the radio frequency front end module 10.

In a communication device, in a Wi-Fi chip, a baseband signal processor may provide a baseband signal for an up-conversion circuit or process a baseband signal from a down-conversion circuit. Refer to FIG. 11A and FIG. 11B. PPFs in a plurality of RF transceiver circuits are coupled.

A Wi-Fi chip includes a plurality of RF transceiver circuits, so that a communication device can support a DBDC mode and a single-band multiple-input multiple-output mode. Radio frequency front end modules corresponding to the plurality of RF transceiver circuits may alternatively be configured to be in a DBDC mode and a single-band multiple-input multiple-output mode. For example, the radio frequency front end modules corresponding to the plurality of RF transceiver circuits may be respectively denoted as a first radio frequency front end module and a second radio frequency front end module.

The radio frequency front end modules corresponding to the plurality of RF transceiver circuits may alternatively be configured to be in a DBDC mode. When the first radio frequency front end module sends or receives a signal of a first frequency band, the second radio frequency front end module may be specifically configured to send or receive a signal of a second frequency band. Alternatively, when the first radio frequency front end module sends or receives a signal of a second frequency band, the second radio frequency front end module may be configured to send or receive a signal of a first frequency band.

The radio frequency front end modules corresponding to the plurality of RF transceiver circuits may alternatively be configured to be in a single-band multiple-input multiple-output mode. When the first radio frequency front end module sends the signal of the first frequency band, the second radio frequency front end module may be specifically configured to send the signal of the first frequency band. Alternatively, when the first radio frequency front end module sends the signal of the second frequency band, the second radio frequency front end module may be configured to send the signal of the second frequency band. Alternatively, when the first radio frequency front end module receives the signal of the first frequency band, the second radio frequency front end module may be specifically configured to receive the signal of the first frequency band. Alternatively, when the first radio frequency front end module receives the signal of the second frequency band, the second radio frequency front end module may be configured to receive the signal of the second frequency band. In other words, the first radio frequency front end module and the second radio frequency front end module synchronously send signals of a same frequency band, or synchronously receive signals of a same frequency band.

In some scenarios, the first frequency band and the second frequency band may be Wi-Fi 5G and Wi-Fi 6G, respectively. Alternatively, the first frequency band and the second frequency band are a Wi-Fi 5G highband and a Wi-Fi 5G lowband, respectively. Alternatively, the first frequency band and the second frequency band are a Wi-Fi 6G highband and a Wi-Fi 6G lowband, respectively.

Compared with a conventional communication device, because a radio frequency front end module 10 occupies a smaller area on a PCB board, and hardware costs are lower, PCB layout of a communication device is facilitated, and board-level cabling in the communication device is simplified. In addition, the communication device has a strong coexistence interference suppression capability, and a signal receiver sensitivity is high, which can bring good user experience.

As shown in FIG. 12A to FIG. 12D, this application further provides a communication device. The communication device may include a Wi-Fi chip. The Wi-Fi chip may include four RF transceiver circuits and a baseband signal processor. The baseband signal processor may include the CPU, the MAC, the PHY, and the like. The communication device further includes four radio frequency front end modules 10 corresponding to the four RF transceiver circuits. In some examples, a first frequency band and a second frequency band (the first frequency band and the second frequency band are different) supported by each radio frequency front end module 10 may be Wi-Fi 5G and Wi-Fi 6G, respectively. Alternatively, the first frequency band and the second frequency band are a Wi-Fi 5G highband and a Wi-Fi 5G lowband, respectively. Alternatively, the first frequency band and the second frequency band are a Wi-Fi 6G highband and a Wi-Fi 6G lowband, respectively.

In some other examples, in the communication device, the four radio frequency front end modules 10 may be configured to be in a DBDC mode. The four radio frequency front end modules 10 may alternatively be configured to be in a single-band multiple-input multiple-output mode.

The four radio frequency front end modules 10 may all work in receiving/sending of a signal of a Wi-Fi 5G frequency band, and the communication device may be denoted as a 5G 4*4 communication device. The four radio frequency front end modules 10 may all work at a Wi-Fi 5G lowband (LB), and may support a Wi-Fi 5G LB 4x4 time division mode. The four radio frequency front end modules 10 may all work at a Wi-Fi 5G highband (HB), and support a Wi-Fi 5G HB 4x4 time division mode. In the four radio frequency front end modules 10, two radio frequency front end modules 10 work at the Wi-Fi 5G LB, and other two radio frequency front end modules 10 work at the Wi-Fi 5G HB, so that the communication device can support Wi-Fi 5G LB 2x2 and 5G HB 2x2 air interface-independent concurrent working modes.

The four radio frequency front end modules 10 may all work in receiving/sending of a signal of a Wi-Fi 6G frequency band, and the communication device may be denoted as a 6G 4*4 communication device. The four radio frequency front end modules 10 may all work at a Wi-Fi 6G LB, and may support a Wi-Fi 6G LB 4x4 time division mode. The four radio frequency front end modules 10 may all work at a Wi-Fi 6G HB, and support a Wi-Fi 6G HB 4x4 time division mode. In the four radio frequency front end modules 10, two radio frequency front end modules 10 work at the Wi-Fi 6G LB, and other two radio frequency front end modules 10 work at the Wi-Fi 6G HB, so that the communication device can support Wi-Fi 6G LB 2x2 and 6G HB 2x2 air interface-independent concurrent working modes.

If two radio frequency front end modules 10 in the communication device work at Wi-Fi 5G, and other two radio frequency front end modules 10 work at Wi-Fi 6G, the communication device may be denoted as a 5G 2*2+6G 2*2 communication device. If two radio frequency front end modules 10 in the communication device work at the Wi-Fi 5G HB, and other two radio frequency front end modules 10 work at the Wi-Fi 5G LB, the communication device may be denoted as a 5G LB 2*2+5G HB 2*2 communication device. If two radio frequency front end modules 10 in the communication device work at the Wi-Fi 6G HB, and other two radio frequency front end modules 10 work at the Wi-Fi 6G LB, the communication device may be denoted as a 6G LB 2*2+6G HB 2*2 communication device.

This application further provides a radio frequency apparatus. The radio frequency apparatus may include a signal splitter, any radio frequency front end module 10 in the foregoing embodiments, a down-conversion circuit, and an up-conversion circuit. The signal splitter is separately coupled to a first port of the radio frequency front end module, a second port of the radio frequency front end module, and an antenna. The down-conversion circuit is coupled to a receiving branch of the radio frequency front end module, and is configured to perform down-mixing processing on a signal output by the radio frequency front end module. The up-conversion circuit is coupled to a sending branch of the radio frequency front end module, and is configured to perform up-mixing processing on a baseband signal and output a processed baseband signal to the sending branch of the radio frequency front end module. For a structure and a function of the down-conversion circuit and a structure and a function of the up-conversion circuit, refer to related introductions and descriptions in the foregoing embodiments. Details are not described herein again. The radio frequency apparatus provided in embodiments of this application may be independently integrated. The radio frequency front end module 10, the down-conversion circuit, and the up-conversion circuit are integrated into a same PCB or a same package.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio frequency front end module, comprising a first port, a second port, a receiving branch, a sending branch, and a switching module, wherein
the first port is coupled to the sending branch and the receiving branch through the switching module, the second port is coupled to the sending branch and the receiving branch through the switching module, the first port supports signal transmission of a first frequency band, the second port supports signal transmission of a second frequency band, and the first frequency band is different from the second frequency band;
the receiving branch supports receiving processing of signals of the first frequency band and the second frequency band;
the sending branch supports sending processing of signals of the first frequency band and the second frequency band; and
the switching module is configured to selectively transmit a signal processed by the sending branch to the first port or the second port, or selectively transmit a signal received by the first port or a signal received by the second port to the receiving branch.

2. The radio frequency front end module according to claim 1, further comprising a first isolation module and a second isolation module, wherein
the first port is coupled to the switching module through the first isolation module, and the first isolation module is configured to selectively connect or isolate the first port to/from the switching module; and
the second port is coupled to the switching module through the second isolation module, and the second isolation module is configured to selectively connect or isolate the second port to/from the switching module.

3. The radio frequency front end module according to claim 2, wherein the first isolation module is specifically configured to:
when the receiving branch is connected to the second port and the signal of the second frequency band is received through the second port, isolate an interference signal received by the first port, so that power of the isolated interference signal is attenuated below a preset first threshold at the receiving branch.

4. The radio frequency front end module according to claim 2, wherein the first isolation module is specifically configured to:
when the receiving branch is connected to the second port and the signal of the second frequency band is received through the second port, isolate an interference signal received by the first port, so that power density of the isolated interference signal in the second frequency band is less than a preset second threshold, and at least part of a frequency of the interference signal falls within a range of the second frequency band.

5. The radio frequency front end module according to claims 2 to 4, wherein the second isolation module is specifically configured to:
when the receiving branch is connected to the second port and the signal of the first frequency band is received through the first port, isolate an interference signal received by the second port, so that power of the isolated interference signal is attenuated to a preset third threshold at the receiving branch; or
when the receiving branch is connected to the first port and the signal of the first frequency band is received through the first port, isolate an interference signal received by the second port, so that power density of the isolated interference signal in the first frequency band is less than a preset fourth threshold, and at least part of a frequency of the interference signal falls within a range of the first frequency band.

6. The radio frequency front end module according to claims 2 to 5, wherein isolation of the first isolation module is adjustable, and isolation of the second isolation module is adjustable.

7. The radio frequency front end module according to any one of claims 2 to 5, wherein
the first isolation module comprises at least one single-pole single-throw switch; and
the second isolation module comprises at least one single-pole single-throw switch.

8. The radio frequency front end module according to any one of claims 2 to 7, wherein the switching module comprises a first changeover switch and a second changeover switch, wherein
the first changeover switch is separately coupled to the first isolation module, the sending branch, and the receiving branch, and is configured to selectively connect either of the sending branch or the receiving branch to the first isolation module; and
the second changeover switch is separately coupled to the second isolation module, the sending branch, and the receiving branch, and is configured to selectively connect either of the sending branch or the receiving branch to the second isolation module.

9. The radio frequency front end module according to claim 8, wherein the first changeover switch is specifically configured to:
when the receiving branch receives the signal of the second frequency band through the second port, disconnect the first isolation module from the receiving branch; and
the second changeover switch is specifically configured to:
when the receiving branch receives the signal of the first frequency band through the first port, disconnect the second isolation module from the receiving branch.

10. The radio frequency front end module according to claim 8 or 9, wherein the first changeover switch and the second changeover switch are single-pole multi-throw switches;
a movable end of the first changeover switch is coupled to the first isolation module, a first contact end of the first changeover switch is coupled to the sending branch, and a second contact end of the first changeover switch is coupled to the receiving branch; and
a movable end of the second changeover switch is coupled to the second isolation switch, a third contact end of the second changeover switch is coupled to the sending branch, and a fourth contact end of the second changeover switch is coupled to the receiving branch.

11. The radio frequency front end module according to any one of claims 2 to 7, wherein the switching module comprises a third changeover switch and a fourth changeover switch, wherein
the third changeover switch is coupled to the first isolation module, the second isolation module, and the fourth changeover switch, and is configured to selectively connect either of the first isolation module or the second isolation module to the fourth changeover switch; and
the fourth changeover switch is coupled to the sending branch, the receiving branch, and the third changeover switch, and is configured to selectively connect either of the sending branch or the receiving branch to the third changeover switch.

12. The radio frequency front end module according to claim 11, wherein the third changeover switch and the fourth changeover switch are single-pole multi-throw switches;
a movable end of the third changeover switch is coupled to a movable end of the fourth changeover switch, a fifth contact end of the third changeover switch is coupled to the first isolation module, and a sixth contact end of the third changeover switch is coupled to the second isolation module; and
a seventh contact end of the fourth changeover switch is coupled to the sending branch, and an eighth contact end of the fourth changeover switch is coupled to the receiving branch.

13. The radio frequency front end module according to any one of claims 1 to 12, wherein the first frequency band is a wireless fidelity Wi-Fi 5G frequency band, and the second frequency band is a Wi-Fi 6G frequency band.

14. The radio frequency front end module according to any one of claims 1 to 13, wherein the receiving branch comprises an adjustable low noise amplifier, and an operating band of the adjustable low noise amplifier covers the first frequency band and the second frequency band.

15. The radio frequency front end module according to claim 14, further comprising a third port, wherein
one end of the adjustable low noise amplifier is coupled to the third port, and another end of the adjustable low noise amplifier is coupled to the switching module; and
the receiving branch further comprises a bypass switch connected in parallel to the low noise amplifier, wherein the bypass switch is configured to selectively bypass the low noise amplifier

16. The radio frequency front end module according to any one of claims 1 to 13, wherein the sending branch comprises a power amplifier and a filter connected in series, wherein a bandwidth of the filter covers the first frequency band and the second frequency band, or the filter is an adjustable filter, and an operating band of the adjustable filter covers the first frequency band and the second frequency band.

17. A radio frequency apparatus, comprising a signal splitter, the radio frequency front end module according to any one of claims 1 to 16, a down-conversion circuit, and an up-conversion circuit, wherein
the signal splitter is separately coupled to a first port of the radio frequency front end module, a second port of the radio frequency front end module, and an antenna;
the down-conversion circuit is coupled to a receiving branch of the radio frequency front end module, and is configured to perform down-mixing processing on a signal output by the radio frequency front end module; and
the up-conversion circuit is coupled to a sending branch of the radio frequency front end module, and is configured to perform up-mixing processing on a baseband signal and output a processed baseband signal to the sending branch of the radio frequency front end module.

18. A communication device, comprising a Wi-Fi chip and a plurality of radio frequency front end modules according to any one of claims 1 to 16, and the Wi-Fi chip is separately coupled to the plurality of radio frequency front end modules, wherein
the plurality of radio frequency front end modules are configured to support dual band dual concurrent or single-band multiple-input multiple-output.

19. The communication device according to claim 18, wherein the plurality of radio frequency front end modules comprise a first radio frequency front end module and a second radio frequency front end module, and the plurality of radio frequency front end modules are configured to support dual band dual concurrent; and
when the first radio frequency front end module sends or receives a signal of a first frequency band, the second radio frequency front end module is specifically configured to send or receive a signal of a second frequency band; or
when the first radio frequency front end module sends or receives a signal of a second frequency band, the second radio frequency front end module is specifically configured to send or receive a signal of a first frequency band.

20. The communication device according to claim 18, wherein the plurality of radio frequency front end modules comprise a first radio frequency front end module and a second radio frequency front end module, and the plurality of radio frequency front end modules are configured to support single-band multiple-input multiple-output; and
when the first radio frequency front end module sends the signal of the first frequency band or the signal of the second frequency band, the second radio frequency front end module is specifically configured to send a signal that is in a same frequency band as the signal sent by the first radio frequency apparatus; or
when the first radio frequency front end module receives the signal of the first frequency band or the signal of the second frequency band, the second radio frequency front end module is specifically configured to receive a signal that is in a same frequency band as the signal sent by the first radio frequency front end module.
